# EUROPÄISCHE PATENTSCHRIFT

(11) **EP 1 145 066 B1**
(45) Veröffentlichungstag und Bekanntmachung des Hinweises auf die Patenterteilung: **02.03.2005**
(21) Anmeldenummer: 99967963.2
(22) Anmeldetag: 21.12.1999
(51) Int. Cl.: G02B 21/00

(54) **POSITIONIERUNG DES MESSVOLUMENS IN EINEM SCANNING-MIKROSKOPISCHEN VERFAHREN**
SCANNING MICROSCOPIC METHOD HAVING HIGH AXIAL RESOLUTION
PROCEDE DE MICROSCOPIE ELECTRONIQUE A BALAYAGE A HAUTE RESOLUTION AXIALE

(30) Priorität: 21.12.1998 US 113478 P; 21.12.1998 EP 98124314; 21.12.1998 DE 19860549
(43) Veröffentlichungstag der Anmeldung: 17.10.2001
(73) Patentinhaber: Evotec OAI AG, 22525 Hamburg (DE)
(72) Erfinder: MÜLLER, Jürgen, Rolf, D-22081 Hamburg (DE)
(74) Vertreter: Hilleringmann, Jochen
(86) Internationale Anmeldenummer: PCT/EP1999/010142
(87) Internationale Veröffentlichungsnummer: WO 2000/037984

(56) Entgegenhaltungen:
- WO-A-92/15034
- WO-A-95/22058
- DE-A- 19 713 362
- US-A- 4 844 617
- US-A- 5 062 715
- US-A- 5 084 612
- US-A- 5 248 876
- PATENT ABSTRACTS OF JAPAN vol. 018, no. 436 (P-1786), 15. August 1994 (1994-08-15) & JP 06 137864 A (BROTHER IND LTD), 20. Mai 1994 (1994-05-20) in der Anmeldung erwähnt
- PATENT ABSTRACTS OF JAPAN vol. 098, no. 004, 31. März 1998 (1998-03-31) & JP 09 325277 A (NIKON CORP), 16. Dezember 1997 (1997-12-16) in der Anmeldung erwähnt

## Beschreibung

Die vorliegende Erfindung betrifft ein Verfahren zur optischen Erfassung mindestens einer Entität auf bzw. in einem, bevorzugt auf einem Träger befindlichen, Substrat. Ferner werden Anwendungsfelder des erfindungsgemäßen Verfahrens sowie eine Vorrichtung zur Durchführung desselben Bei einer Entität handeltes sich um ein Molekül, einen Molekülbeschrieben. komplex, ein Polymer, einen polymeren Partikel, einen aus anorganischen Materialien aufgebauten Partikel, eine vesikuläre Struktur, eine Zelle, eine Bakterie oder ein virus.

Es ist bekannt, daß konfokale oder für Mehrphotonenanregung ausgelegte Anordnungen wegen ihrer hohen axialen Ortsauflösung geeignet sind, um Hintergrundsignale zu reduzieren-, welche außerhalb der Fokalebene entstehen. Bei der Erfassung insbesondere großflächiger Strukturen ergibt sich somit das Problem, daß im Rahmen des Scanvorgangs darauf geachtet werden muß, daß die Fokalebene sich zu jeder Zeit an einer gewünschten Position innerhalb des zu untersuchenden Objektes befindet. So kann es vorkommen, daß z. B. Unebenheiten eines Probenträgers, auf dem das zu untersuchende Objekt angeordnet ist, dazu führen, daß sich das konfokale Meßvolumen nicht in der gewünschten Ebene im Objekt befindet, sondern womöglich an das Objekt angrenzende Strukturen, wie z. B. Teile des Probenträgers, erfaßt. Dies wirkt sich nachteilig auf die durchzuführende Objekterfassung und -charakterisierung aus. Es ist daher erforderlich, Maßnahmen zu ergreifen, um die Fokalebene innerhalb einer bestimmten Position zu halten bzw. nachzuführen.

In "Patent Abstracts of Japan" (vol. 018, no. 436 (P-1786), 15. August 1994) wird eine Vorrichtung zur Detektion der Fokusposition beschrieben. welche zur automatischen Fokussierung einer bilderzeugenden Vorrichtung oder zur Messung von Unebenheiten auf der Oberfläche eines Untersuchungsobjektes geeignet ist. Es wird eine optische Faser verwendet, deren Ende mittels eines Aktuators entlang der optischen Achse bewegt wird. Das derart erzeugte Störsignal wird zur Abweichungserfassung der Fokusposition sowie Nachregelung derselben verwendet.

In "Patent Abstracts of Japan° (vol. 098, no. 004, 31. März 1998) wird ein Fokusdetektor unter Verwendung des Prinzips der konfokalen Mikroskopie vorgeschlagen.

US-A- 5,062,715 offenbart die Verwendung eines konfokalen Autofokussystems in einem für die Vermessung von Oberflächenschwingungen ausgelegten Michelson-Interferometer.

US-A- 5,084,612 beschreibt ein bildgebendes Verfahren für ein in Transmissionsgeometrie konstruiertes Scanningmikroskop. Hierbei wird die Läge einer für die Detektion verwendeten Lochblende so nachgeführt, daß etwaige aufgrund von Brechungseffekten im Bereich der Probe auftretende Ablenkungen des transmittierten Lichtes ausgeglichen werden. Es ist jedoch nicht Ziel des Verfahrens, die Lage des Meßfokus in der Probe nachzuführen.

In WO-A-95/22058 wird eine konfokale Detektionsvorrichtung beschrieben, welche eine automatische Fokussiereinrichtung aufweist, die eine konfokate Lochblende beinhaltet. Die Autofokussierung wird in drei Schritten vorgenommen. Zunächst wird ein Laser auf die Rückseite eines die Probe aufweisenden Substrates fokussiert. In einem weiteren Schritt wird der Fokus in einer Ebene oberhalb des Substrates positioniert. Erst in einem dritten Schritt wird nach Durchfahren der gewünschten Position auf der Substratoberfläche die genaue Lage der Oberfläche ermittelt und der Fokus auf die Substratoberfläche eingestellt. Dieser Prozeß wird an den vier Ecken des Substrates durchgeführt und gestaltet sich als äußerst zeitaufwendig. Während der eigentlichen Vermessung der Probe ist der Betrieb der Autofokussierung nicht möglich und die Fokushöhe wird durch Interpolation geschätzt. Hierbei können nicht akzeptable Positionierfehler auftreten, insbesondere bei nicht planen Substraten, wie sie aus Kostengründen im Labor in der Regel verwendet werden.

Schließlich sind in US-A-5 248 876 und DE-A-197 13 362 optische Vorrichtungen zur Abtastung von Objekten beschrieben, wobei zwei Strahlenbündel auf das Objekt fokussiert werden.

Der Erfindung liegt somit die Aufgabe zugrunde, ein Verfahren bereitzustellen, welches eine zuverlässige Erfassung flächiger Strukturen oder dreidimensionaler Strukturen, welche bevorzugt auf einem flächigen Träger angeordnet sind, in einer Detektionsvorrichtung mit hoher axialer Auflösung, insbesondere einem konfokalen Mikroskop, erlaubt. Ferner soll eine Vorrichtung zur Durchführung des Verfahrens bereitgestellt werden.

Die Aufgabe wird gelöst durch ein Verfahren mit den Merkmalen der Ansprüche 1 oder 2 sowie eine Vorrichtung mit den Merkmalen der Ansprüche 15, 16 oder 17.

Die Erfindung stellt ein Verfahren und eine Vorrichtung zur optischen Erfassung mindestens einer Entität auf und/oder in einem, bevorzugt auf einem Träger befindlichen, Substrat bereit, wobei mittels mindestens einer konfokalen oder für die Mehrphotonenanregung ausgelegten Einrichtung, bestehend aus Strahlungsquelle und einer Optik (wie z. B. einem Objektiv), ein repräsentativer Bereich des die Entität aufweisenden Substrates mit einem Meßvolumen gescannt wird, und zwar unter Erhalt von Meßwerten optischer Parameter. Diese Meßwerte werden sodann zur Charakterisierung der mindestens einen Entität mittels Signalverarbeitung bearbeitet. Während der Dauer der Aufnahme der Meßwerte behält die mindestens eine Entität ihre Position hinsichtlich des Substrates und/oder des Trägers im wesentlichen bei. Das Substrat weist einen Brechungsindex auf, der verschieden ist von dem Brechungsindex mindestens einer an das Substrat angrenzenden Komponente. Bei der angrenzenden Komponente kann es sich beispielsweise um einen Träger handeln, auf dem das Substrat angeordnet ist. Das Substrat kann jedoch auch unmittelbar an eine Immersionsflüssigkeit, Luft oder eine das Substrat abdeckende Komponente, wie z. B. ein Deckglas, angrenzen.

Erfindungsgemäß wird nunmehr vor und/oder während des Scanvorganges ein Hilfsfokus erzeugt, der zumindest teilweise auf der Grenzfläche zwischen Substrat und angrenzender Komponente oder einer anderen geeigneten Grenzfläche liegt. Diese Grenzfläche steht in einer definierten räumlichen Beziehung zur Entität. So könnte beispielhaft die Entität (z. B. zu untersuchende Makromoleküle wie Proteine oder Nukleinsäuren) in einem Substrat (z. B. einem Gel) eingebettet sein, welches sich auf einem Träger (z. B. Probenträger aus optischem Glas) befindet. Die Funktion des Hilfsfokus besteht darin, die Lage der Grenzfläche zu bestimmen und insbesondere eine Abstandsermittlung zwischen der Grenzfläche und der den Hilfsfokus erzeugenden Optik zu ermöglichen. Erfindungsgemäß stehen Hilfsfokus und Meßvolumen zueinander in einer definierten Lagebeziehung, welche durch den Anwender einstellbar ist. Somit ist es möglich, über die Nachführung der Lage des Hilfsfokus auch die Lage des Meßvolumens relativ zur Grenzfläche nachzuführen. Der Abstand des Meßvolumens von der Grenzfläche kann somit vom Anwender gewählt werden.

Mittels eines Detektors, der konfokal angeordnet ist, wird die Intensität des von der Grenzfläche rückrefiektierten Lichtes erfaßt. Diese weist einen Maximalwert auf, sofern der Hilfsfokus in Richtung der optischen Achse auf der Grenzfläche positioniert ist. Die Intensität des Rückreflexes fällt ab, wenn der Hilfsfokus auf der optischen Achse in Richtung des Substrates bzw. der an das Substrat angrenzenden Komponente bewegt wird. Wahlweise können auch mehrere Detektoren entlang der optischen Achse der den Hilfsfokus erzeugenden Optik vor und/oder hinter der Bildebene angeordnet werden und das Verhältnis der detektierten Intensitäten bestimmt werden.

Die Erfindung zeichnet sich somit dadurch aus, daß die Nachführung vorzugsweise on-line während eines gesamten Meßvorganges vorgenommen und dabei das Meßvolumen stets in einer wohldefinierten Ebene mit wählbarem Abstand von der Grenzfläche gehalten werden kann. Die Empfindlichkeit der Fokussiervorrichtung gegenüber Abweichungen von der Sollposition ist bevorzugt größer als die entsprechende Empfindlichkeit der konfokalen Meßvorrichtung, wie nachstehend näher erörtert wird.

In einer bevorzugten Ausführungsform wird der Hilfsfokus mittels derselben Optik erzeugt, die auch zur Erzeugung des Meßvolumens dient. Es ist sogar möglich, dieselbe Strahlungsquelle zur Generierung von Hitfs- und Meßfokus zu verwenden. Eine derartige Strahlungsquelle emittiert beispielsweise Licht unterschiedlicher Wellenlängen oder Polarisationen, das durch geeignete optische Komponenten separiert und somit den entsprechenden Strahlengängen zugeführt werden kann.

Um die gewünschte Positionierung des Hilfsfokus, und somit mittelbar auch des Meßvolumens, vor und/oder während des Scanvorganges zu ermöglichen, ist es wünschenswert festzustellen, ob die Position des Hilfsfokus von der Grenzfläche in Richtung des Substrates oder aber in Richtung der an das Substrat angrenzenden Komponente abweicht. Erfindungsgemäß werden folgende Lösungen vorgeschlagen.

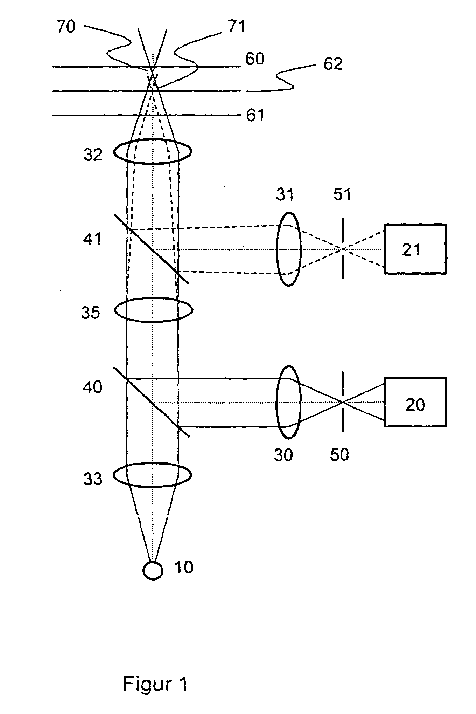

In einer ersten bevorzugten Ausfühnrngsform wird die Position des Hilfsfokus relativ zur Grenzfläche im wesentlichen entlang der optischen Achse variiert und die Intensität des Rückreflexes in Abhängigkeit von der Bewegung registriert (siehe Figuren 1, 2, 3, 5 und 6). Hierbei kann beispielsweise die fokussierende Optik entlang der optischen Achse auf- und abbewegt werden. Es ist jedoch auch möglich, das Substrat, weiches sich beispielsweise auf einem in z-Richtung unmittelbar oder mittelbar positionierbaren Träger befindet, entsprechend zu bewegen. Es ist ferner möglich, die Divergenz des Strahlenbündels zu variieren, das zur Erzeugung des Hilfsfokus dient. Die Bewegung kann bevorzugt periodisch durchgeführt werden. Die vom konfokal angeordneten Detektor erfaßte Intensität wird sich jeweils dann erhöhen, wenn sich der Abstand zwischen reflektierender Grenzfläche und Hilfsfokus verringert. Umgekehrt wird sich die Intensität erniedrigen, wenn durch die Bewegung der genannte Abstand vergrößert wird. Aus der Bewegungsrichtung, die zu einer Erhöhung bzw. Erniedrigung der detektierten Intensität führt, kann somit ermittelt werden, in welcher Richtung die Position des Hilfsfokus von der Lage der Grenzfläche abweicht und die Abweichung entsprechend korrigiert werden.

Die Amplitude der Bewegung ist bevorzugt so zu wählen, daß eine gleichzeitige Aufnahme von Meßwerten aus dem Meßvolumen nicht gestört wird. In der Regel wird daher die Amplitude der Bewegung der Größenordnung der axialen Ausdehnung des Meßvolumens entsprechen oder kleiner sein als diese Ausdehnung. Im letzteren Fall sollte die Ausdehnung des konfokal detektierten Volumens des Hilfsfokus - insbesondere in Richtung der jeweiligen optischen Achsen der zur Erzeugung von Hilfsfokus und Meßvolumen verwendeten Objektive - geringer sein als die Ausdehnung des Meßvolumens. Eine solch geringere Ausdehnung kann vorzugsweise dadurch erhalten werden, daß der Hilfsfokus mittels einer Optik mit einer Numerischen Apertur erzeugt wird, die größer ist als die Numerische Apertur der zur Erzeugung des Meßvolumens verwendeten Optik. Wahlweise kann zur Erzeugung des Meßvolumens auch nur ein geringerer Teil der Numerischen Apertur einer gemeinsamen Optik oder der jeweiligen Optiken genutzt werden als zur Erzeugung des Hilfsfokus. In einer weiteren Variante wird bei der Detektion des Hilfsfokus eine konfokal angeordnete Blende verwendet, die eine geringere Öffnung aufweist als eine bei der Detektion des Meßvolumens verwendete konfokal angeordnete Blende.

In einer zweiten bevorzugten Ausführungsform wird die Position des Hilfsfokus relativ zur Grenzfläche sowohl lateral zur optischen Achse der den Hilfsfokus erzeugenden Optik als auch axial bewegt. Die Auswertung des Rückreflexes kann in analoger Weise wie in der vorgenannten Ausführungsform erfolgen.

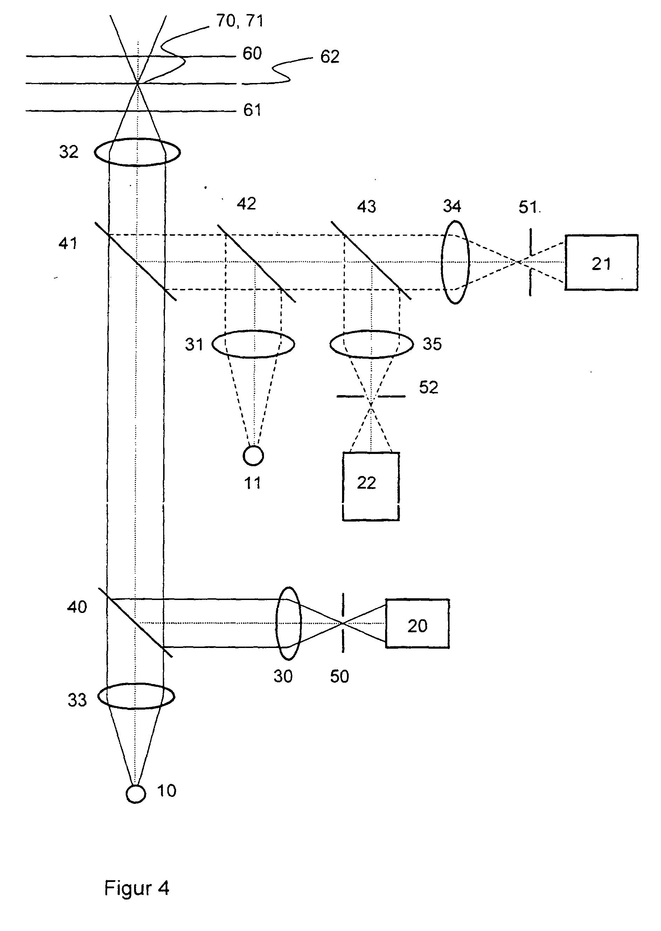

In einer dritten bevorzugten Ausführungsform wird die Intensität des Rückreflexes mittels mindestens zweier entlang der optischen Achse angeordneter Detektoren erfaßt. Dazu wird das von der Grenzfläche reflektierte Licht des Hilfsfokus beispielsweise über teildurchlässige Spiegel auf die Detektoren aufgeteilt. Die Detektoren werden bevorzugt in unterschiedlicher Entfernung von der fokussierenden Optik, insbesondere vor und hinter der Bildebene, angeordnet, so daß - abhängig von der Lage des Hilfsfokus relativ zur reflektierenden Grenzfläche - unterschiedliche Anteile der reflektierten Intensität von den Detektoren erfaßt werden. Aus der Verteilung der von den Detektoren erfaßten Intensitäten kann somit ermittelt werden, in welcher Richtung die Position des Hilfsfokus von der Lage der Grenzfläche abweicht. Dies wird exemplarisch in Fig. 4 dargestellt.

Beispielsweise erfassen zwei in gleichem Abstand von der Bildebene vor und hinter dieser Ebene angeordnete Detektoren ein intensitätsverhältnis von 1:1, wenn der Hilfsfokus auf der Grenzfläche liegt. Je nach Richtung der Abweichung des Hilfsfokus von der Grenzfläche steigt die von einem der beiden Detektoren erfasste Intensität an.

Eine allfällig ermittelte Abweichung des Hilfsfokus von der gewünschten Position läßt sich in allen Ausführungsformen durch eine entsprechende Nachführung, die ggf. der oben beschriebenen Bewegung überlagert wird, korrigieren. Es ist bevorzugt, den Hilfsfokus so nachzuführen, daß dieser sich im wesentlichen auf der Grenzfläche befindet.

Um einen möglichst geringen apparativen Aufwand zu betreiben, ist es wünschenswert, den Hilfsfokus mittels derselben Optik zu erzeugen, die auch zur Erzeugung des Meßvolumens dient. In einer derartigen Ausführung der Erfindung können beispielsweise teildurchlässige Spiegel eingesetzt werden, um die Strahlen, die Meßvolumen bzw. Hilfsfokus erzeugen, vor dem Objektiv zusammenzuführen, sowie die aus dem Meßvolumen bzw. Hilfsfokus detektierte Strahlung wieder zu separieren. Möchte man beispielsweise Meßvolumen und Hilfsfokus in einstellbarem Abstand zueinander im wesentlichen entlang der optischen Achse anordnen, so ist es zweckmäßig, dem Objektiv auf der der Probe abgewandten Seite geeignete optische Elemente (z. B. Linsen, konvexe oder konkave Spiegel) mit dem Ziel vorzuschalten, zwei Strahlenbündel unterschiedlicher Divergenz bzw. Konvergenz zu erzeugen, die sodann vom Objektiv zum Meßvolumen einerseits und Hilfsfokus andererseits fokussiert werden.

Andererseits kann eine Anordnung gewählt werden, in der Meßvolumen und Hilfsfokus über separate Optiken erzeugt werden. In diesem Fall werden die beiden Optiken vorteilhaft mechanisch oder regelungstechnisch so verbunden, daß eine Nachführung des Hilfsfokus eine entsprechende Nachführung des Meßvolumens bewirkt. Auch in dieser Ausführung können Meßvolumen und Hilfsfokus entweder ganz oder teilweise überlappend, oder aber räumlich getrennt angeordnet sein. Die Positionierung von Hilfsfokus und Meßvolumen zueinander kann in diesem Fall durch die Positionen der beiden genannten Optiken zueinander eingestellt werden.

Es kann bevorzugt sein, den Anregungsstrahlengang sowohl für das Meßvolumen als auch für den Hilfsfokus mit ein- und derselben Strahlungsquelle zu erzeugen, die optional in der Lage ist, Strahlung unterschiedlicher Wellenlängen zu emittieren. Andererseits kann es, insbesondere bei räumlicher Trennung von Meßvolumen und Hitfsfokus, bevorzugt sein, zwei getrennte Strahlungsquellen zu verwenden. Bei den Strahlungsquellen kann es sich beispielhaft um Laser, lichtemittierende Dioden, Glüh- oder Gasentladungslampen handeln. Als dem Fachmann bekannte geeignete Detektoren kommen z. B. Avalanche Photodioden oder sonstige Photodioden sowie Photomultiplier in Betracht. Bevorzugt sind Mittel zur Einzelphotonendetektion.

In einer weiteren Ausgestaltung des erfindungsgemäßen Verfahrens und der Vorrichtung ist es besonders vorteilhaft, zur Erzeugung des Meßvolumens und/oder des Hilfsfokus ein Objektiv mit einer hohen numerischen Apertur, bevorzugt größer 0.9, und/oder einem kleinen Arbeitsabstand zu wählen. Die Wahl eines geringen Arbeitsabstandes, insbesondere kleiner/gleich einem Millimeter, wirkt sich besonders günstig bei Fluoreszenzmessungen im Meßvolumen aus. Im Emissionsstrahlengang auftretende Absorption des Fluoreszenzlichtes verringert die Zählrate pro Molekül, d.h. die pro Molekül detektierte Fluoreszenzintensität. Dieser Effekt geht im Gegensatz zu den Erwartungen offenbar linear bzw. stärker als linear in das Signal-Rausch-Verhältnis ein, so daß sich ein geringer Arbeitsabstand als vorteilhaft erweist.

Der Scanvorgang kann bevorzugt folgendermaßen ausgeführt werden. Es wird ein konfokales Mikroskop zur optischen Erfassung eines Beobachtungsvolumens verwendet mit einer Strahlungsquelle, bevorzugt zur Erzeugung von Anregungslicht, einem dichroitischen Spiegel, von dem die auftreffende Strahlung der Strahlungsquelle reflektiert wird, einer eine mechanische Apertur aufweisenden Objektivlinsenanordnung, die die von dem dichroitischen Spiegel reflektierte Strahlung empfängt und auf das Beobachtungsvolumen fokussiert, und einer Beobachtungsoptikanordnung. die von dem Beobachtungsvolumen ausgehende und durch den dichroitischen Spiegel hindurchtretende Strahlung empfängt. Zwischen dem dichroitischen Spiegel und der Objektivlinsenanordnung befindet sich eine Ablenkspiegelanordnung, die einen bevorzugt planen objektivseitigen Ablenkspiegel aufweist, der um eine Normalpunktlage oszillierbar angeordnet ist. Bei Oszillation des objektivseitigen Spiegels kreuzen sich die optischen Achsen des jeweils reflektierten Anregungslichtes in im wesentlichen einem gemeinsamen Schnittpunkt im Bereich der mechanischen Apertur der Objektivtinsenanordnung. Die Oszillationsachse des objektivseitigen Ablenkspiegels ist gleich der Schnittlinie der von dem objektivseitigen Ablenkspiegel aufgespannten Ebene mit derjenigen Ebene, die durch den gemeinsamen Schnittpunkt der optischen Achsen der reflektierten Strahlung und senkrecht zur optischen Achse der reflektierten Strahlung bei in seiner Normalpunktlage befindlichem objektivseitigen Ablenkspiegel verläuft. Eine entsprechende Vorrichtung ist in WO-A-97/48001 detailliert beschrieben, auf die hiermit ausdrücklich Bezug genommen wird. Es lassen sich jedoch auch andere, dem Fachmann bekannte Verfahren zur Ablenkung des von der Strahlungsquelle erzeugten Strahles einsetzen. Wahlweise ist es auch möglich, die Position des Substrates oder der verwendeten Mikroskopoptik(en) mittelbar oder unmittelbar zu variieren.

Als optische Parameter können beispielsweise Streulichtintensitäten, Fluoreszenzintensitäten bei mindestens einer Wellenlänge, Fluoreszenzintensitäten in Abhängigkeit von der Polarisation, Fluoreszenzlebensdauern und/oder molekulare Helligkeiten bestimmt werden. Es kann hierbei bevorzugt sein, molekulare Helligkeiten gemäß des in WO-A-98/16814 beschriebenen Verfahrens zu bestimmen. Es wird dort beschrieben, daß Intensitätsfluktuationen emittierter Strahlung von in einem Meßvolumen befindlichen Partikeln mittels eines Detektors beobachtet werden, wobei das Verfahren die folgenden Schritte umfaßt: wiederholte Messung der Anzahl von Photonen pro Zeitintervall definierter Länge; Bestimmung einer Funktion, wie beispielsweise einer Verteilungsfunktion, der Anzahl von Photonen pro Zeitintervall; und sodann Bestimmung einer Funktion, wie auch hier beispielsweise einer Verteilungsfunktion, der spezifischen partikulären Helligkeiten auf Basis der Funktion der Anzahl der Photonen pro Zeitintervall. Es werden weiterhin Hinweise gegeben, wie die Funktion der Anzahl von Photonen prozessiert werden kann oder wie beispielsweise instrumentelle Parameter angemessen berücksichtigt werden können. Physikalische Eigenschaften von Partikeln, insbesondere partikuläre Helligkeiten, können aber auch wie in WO-A-99/17086 dargelegt ermittelt werden. Das dort beschriebene Verfahren umfaßt die folgenden Schritte: wiederholte Messung der Dauer von Zeitabschnitten zwischen detektierten Photonen; Bestimmung einer Funktion, z.B. einer Verteilungsfunktion, der Dauer der genannten Zeitabschnitte; und sodann Bestimmung einer Funktion spezifischer physikalischer Eigenschaften der zu untersuchenden Partikel auf Basis der genannten Funktion der Dauer von Zeitabschnitten. Es wird insbesondere ein Fittingprozeß bezüglich experimentell bestimmter und theoretischer Funktion der Dauer der Zeitintervalle vorgeschlagen, wobei hinsichtlich der theoretischen Funktion Parameter einer räumlichen Heltigkeitsfunktion, weiche für die instrumentelle Anordnung charakteristisch ist, berücksichtigt werden. Es wird vorgeschlagen, beispielsweise Fluoreszenzpolarisation, wellenlängenabhängige Fluoreszenzintensitäten, Fluoreszenzlebensdauern, Energietransfer, etc. zu untersuchen. In einer weiteren Ausführungsform kann es vorteilhaft sein, mehrere optische Parameter zu ermitteln, um somit eine verbesserte Charakterisierung der Entität zu erzielen. Dies kann insbesondere mittels des in WO-A-98/57979 beschriebenen Verfahrens erfolgen. Es wird hier folgendes Verfahren vorgeschlagen: Bestimmung von Intensitätsfluktuationen emittierter Strahlung von in einem Meßvolumen befindlichen Partikeln mittels mindestens eines Detektors; Bestimmung intermediärer statistischer Daten beinhaltend eine mindestens zwei-dimensionale statistische. Funktion auf Basis der genannten Intensitätsfluktuationen; Bestimmung von Informationen auf Basis der intermediären statistischen Daten. Im letzten Schritt kann z.B. das gemeinschaftliche Auftreten von zwei Eigenschaften an einem Partikel untersucht werden. Auf den Offenbarungsgehalt der genannten Schriften, insbesondere im Hinblick auf die zu untersuchenden physikalischen Eigenschaften der zu untersuchenden Partikel, ihre Bestimmung sowie die Bestimmung der intermediären statistischen Daten, wird hiermit ausdrucktich Bezug genommen.

Das erfindungsgemäße Verfahren und die zu seiner Durchführung verwendete Vorrichtung eignen sich beispielsweise zur Bestimmung optischer Parameter von Entitäten wie Molekülen, Molekülkomplexen, Polymeren, vesikulären Strukturen, aus z. B. Polymeren oder anorganischen Materialien aufgebaute Partikel aller Art, Zellen, Bakterien und Viren. Diese können z.B. auf mineralischen oder organischen Substraten. angeordnet sein. Hierbei kann es sich insbesondere um polymere Gele, polymere oder aus anorganischen Materialien aufgebaute Partikel, vesikuläre Strukturen, Zellen, Bakterien und Viren handeln.

In einer weiteren Ausführungsform werden a-priori-Informationen über die Verteilung und/oder Struktur der Entitäten und/oder der Substrate in der Signalverarbeitung genutzt. So können beispielsweise als Substrat Bakterien oder polymere Kugeln (sog. Beads) eingesetzt werden, auf deren Oberfläche oder in derem Inneren jeweils bevorzugt gleichartige Entitäten angeordnet sind. Um mit Methoden der Signalverarbeitung, insbesondere der Bildverarbeitung, Meßwerte als zusammengehörig erkennen zu können, ist es oftmals hilfreich, a-priori-Informationen über die zu untersuchenden Substrate, wie beispielsweise deren Gestalt, räumliche Ausdehnung, Anordnung etc., in der Signalverarbeitung zu berücksichtigen. So kann es ferner vorteilhaft sein, über die als gleichartig erkannten Entitäten gehörigen Meßwerte jeweils Mittelwerte zu bilden oder diese anderweitig statistisch auszuwerten, um die Charakterisierung der Entitäten signifikanter zu gestalten. Als Methoden der Signalverarbeitung können an sich in der Literatur bekannte Verfahren zur Objekterkennung eingesetzt werden, wie z. B. Hough-Transfarmation, Template Matching und korrelative Verfahren. Derartige Verfahren sind in der Literatur beschrieben (siehe z.B. E. R. Davies, Machine Vision: Theory, Algorithms, Practicalities; Academic Press, London - San Diego, 2 nd edition, 1997).

Oftmals ist es wünschenswert, durch bestimmte optische Parameter ausgezeichnete Entitäten und/oder Substrate von den übrigen Entitäten und/oder Substraten zu separieren, um sie einer weiteren Analyse und/oder Bearbeitung zu unterziehen. Diese Separation kann beispielsweise mittels eines geeigneten Manipulators, wie z. B. einer Pipette, eines mechanischen Greifers etc. geschehen. Besonders geeignete Verfahren sind beispielhaft in WO-A-95/35492 beschrieben, auf deren Offenbarungsgehalt hiermit ausdrücklich Bezug genommen wird. So wird dort beispielsweise die Entnahme bzw. Separation durch elektrische Spannungs- oder Feldimpulse, durch Druckdifferenzpulse oder auch durch Lichtdruckpulse beschrieben. Es kann auch ein bevorzugt piezogesteuertes Pump- bzw. Dispensiersystem verwendet werden. Im allgemeinen ist es hilfreich, während des Scanvorgangs die ermittelten Meßwerte in Abhängigkeit der Position des Meßvolumens zu erfassen, um somit den Separationsvorgang zu automatisieren.

Das erfindungsgemäße Verfahren und die entsprechende Vorrichtung lassen sich insbesondere in der Wirkstoffsuchforschung, kombinatorischen Chemie, funktionalen Genomanalyse, evolutiven Biotechnologie, Diagnostik, Materialuntersuchung oder Proteom-Analyse einsetzen.

In einer Ausführungsform des erfindungsgemäßen Verfahrens werden beispielsweise Beadstrukturen als Substrate eingesetzt, die jeweils mit einer Vielzahl gleichartiger Entitäten besetzt sind oder die solche enthalten. Diese Entitäten können beispielsweise aus einem Prozeß der kombinatorischen Chemie entstanden sein, wobei in der Regel die eigentliche Struktur der Entität nicht bekannt ist. Die Entitäten können vorzugsweise detektierbare Marker, wie z.B. Fluoreszenzfarbstoffe, aufweisen. Diese Variante hat den Vorteil, daß die nachfolgend zuzusetzenden Reaktionspartner nicht zwangsläufig detektierbare Marker aufweisen müssen. Die Substrate befinden sich vorzugsweise auf einem Träger, z.B. Mikrotiterplatten mit einer Vielzahl von Ausnehmungen oder einer folienartigen Struktur. Die Ober- oder Unterseite des Trägers kann in dieser Ausführung als Grenzfläche zur Nachführung des Hilfsfokus und Meßvolumens genutzt werden. Es werden nunmehr Reaktionspartner zugesetzt, deren Wechselwirkungen mit den Entitäten untersucht werden sollen. Diese Reaktionspartner können in einer Ausgestaltung ebenfalls detektierbare Marker aufweisen. Das Substrat wird sodann abgescannt mit beispielsweise dem Ziel, potentielle Binder der Reaktionspartner unter den Entitäten zu finden und/oder eine chemische Reaktion auszulösen. Die Bindung zwischen Reaktionspartner und Entität kann mit den oben näher beschriebenen optischen Parametern charakterisiert werden. Mit gewünschten Eigenschaften ausgestattete Komplexe zwischen Reaktionspartner und Entität können von den übrigen Entitäten bzw. Substraten separiert werden, um sie einer weiteren Analyse und/oder Behandlung zu unterziehen. Das beschriebene Verfahren wird vorzugsweise in der Wirkstoffsuche angewendet.

In einer weiteren Variante ist zwischen dem Substrat und den einen detektierbaren Marker aufweisenden Entitäten eine spaltbare Linkerstruktur angeordnet. So können z.B. in einem Prozeß der chemischen Synthese auf Substraten, wie polymeren Beads, spaltbare Linkerstrukturen angeordnet sein, die mit Fluoreszenzfarbstoffen gekoppelt werden, an denen sodann die zu untersuchenden Entitäten bevorzugt in einem kombinatorischen Verfahren synthetisiert werden. Diese Variante hat den Vorteil, daß nach Selektion von Beads, welche mit gewünschten Eigenschaften ausgestattete Komplexe zwischen Reaktionspartner und Entität tragen, eine Abspaltung der farbstoffmarkierten Entität erfolgen kann und diese sodann in einem sogenannten löslichen Assay näher analysiert werden kann. Auch diese Variante eignet sich besonders in der Wirkstoffsuche. In einer weiteren Ausgestaltung werden Substrate mit Entitäten bekannter Struktur verwendet, wobei alle Substrate die gleichen Entitäten aufweisen. Bevorzugt werden auch hier die Substrate auf die Ausnehmungen von Mikro- oder Nanotiterplatten verteilt. Sodann wird in jede der Ausnehmungen eine Lösung von Reaktionspartnem, von denen bekannt ist, daß sie mit den Entitäten wechselwirken, zugesetzt. Zudem werden die Ausnehmungen mit Lösungen unterschiedlicher potentieller Wirkstoffe versetzt, um festzustellen, ob diese geeignet sind, die Wechselwirkung zwischen Entität und Reaktionspartner zu beeinflussen.

Die in den vorstehenden Absätzen näher beschriebenen Ausgestaltungen können auch mit biologischen Substraten, wie z.B. Viren, Phagen, Bakterien, Pilze oder eukaryotischen Zellen, ausgeführt werden. So können z.B. natürlich vorkommende oder geklonte Entitäten bevorzugt an Oberflächen der genannten biologischen Substrate untersucht werden mit dem Vorteil, daß hier eine Kopplung zwischen dem als wünschenswert identifizierten Phänotyp mit seinem zugehörigen Genotyp vorliegt. Eine derartige Vorgehensweise ist unter den einschlägigen Begriffen des Phage-Displays oder zellulären Displays bekannt.

In einer weiteren Applikation kann das erfindungsgemäße Verfahren auch in zellulären Reporterassays hilfreich sein. Die Genauigkeit des Scanverfahrens, insbesondere die genaue Ortsauflösung, erlaubt die Beobachtung der Aufnahme und/oder intrazellulären Translokation von Substanzen mit einer überraschend hohen Ortsauflösung sowie Quantifizierungsgenauigkeit.

In vorteilhafter Weise ermöglicht das erfindungsgemäße Verfahren auch die Untersuchung von Signaltransduktionswegen. Es zeichnet sich insbesondere auch dadurch aus, daß mit Primärzellen gearbeitet werden kann und somit auf eine Überexprimierung der zu untersuchenden Entitäten, wie z.B. Rezeptoren, verzichtet werden kann.

Das Verfahren kann zudem im sog. differentiellen Display angewendet werden, in dem beispielsweise Zellen erkrankter Personen mit denen gesunder Personen verglichen werden. Weitere Vergleichsmöglichkeiten beinhalten: behandelte / unbehandelte Zellen, Wildtyp / Mutante, etc.

Weitere Applikationen betreffen die Untersuchung molekularer Interaktionen, wie z.B. Protein-Protein-Wechselwirkungen und Protein-Nukleinsäure-Wechselwirkungen. Insbesondere können auch Wechselwirkungen zwischen Proteinen oder Peptiden unbekannter Natur bzw. Funktion mit Liganden potentieller physiologischer Signifikanz, deren Struktur jedoch oftmals noch nicht aufgeklärt ist, untersucht werden. Hierbei wird vorzugsweise mindestens ein Partner mit einer partikulären Struktur chemisch oder adsorptiv verkoppelt sein.

Es kann auch bevorzugt sein, das erfindungsgemäße Verfahren sowie die zugehörige Vorrichtung im Rahmen der Gel-Elektrophorese einzusetzen. In Kombination mit einem Separations- bzw. Isolierungsvorgang können bestimmte Entitäten auf dem als Substrat dienenden Gel direkt einer weiteren Analyse oder auch Vervielfältigung (PCR, etc.) zugeführt werden.

Das Verfahren und die erfindungsgemäße Vorrichtung können auch eingesetzt werden, um selten vorkommende Zelltypen zu detektieren und bevorzugt zu isolieren, wie dies z.B. in der Pränatal-Diagnostik, in der Onkologie oder allgemein der Pathologie der Fall ist

Nachfolgend werden bevorzugte Ausführungsformen des erfindungsgemäßen Verfahrens respektive der Vorrichtung dargestellt.

Figur 1 beschreibt schematisch den grundsätzlichen Aufbau einer konfokale Mikroskopanordnung mit einer Strahlungsquelle und zwei Detektoren, von denen einer Signale aus dem Hilfsfokus und der andere Signale aus dem Meßvolumen detektiert. Diese Mikroskopanordnung weist nicht sämtliche Merkmale der Erfindung auf, dient jedoch dem besseren Verständnis der in den anderen Figuren gezeigten erfindungsgemäßen Vorrichtungen/Verfahren.

Figur 2 zeigt schematisch eine erfindungsgemäße Ausgestaltung einer konfokaten Mikroskopanordnung, in der Meßvolumen und Hilfsfokus entlang der optischen Achse getrennt voneinander angeordnet sind. Die Anordnung weist eine zusätzliche Strahlungsquelle zur Erzeugung des Hilfsfokus auf.

Figur 3 zeigt eine Variante, in der getrennte Optiken zur Erzeugung von Hilfsfokus und Meßvolumen eingesetzt werden. Es wird exemplarisch gezeigt, daß Hilfsfokus und Meßvolumen sowohl in axialer als auch lateraler Richtung getrennt voneinander angeordnet sein können.

Figur 4 beschreibt eine weitere erfindungsgemäße Ausführung, in der Hilfsfokus und Meßvolumen wiederum durch dieselbe Optik erzeugt werden. In dieser Variante werden zwei Detektoren für das aus dem Hitfsfokus reflektierte Licht eingesetzt, die entlang der optischen Achse zueinander versetzt sind, um die Richtung von Abweichungen der Position des Hilfsfokus zu erkennen.

Figur 5 beschreibt eine Ausführungsform, beider als Grenzfläche der Übergang eines Substrates zur angrenzenden Luftschicht dient Über unterschiedliche Ausnutzung der Numerischen Apertur des verwendeten Objektivs werden unterschiedliche Größen von Hilfsfokus und Meßvolumen erzielt.

Figur 6 zeigt eine Ausgestaltung mit einem faseroptischen Koppler.

Figur 7 a und b zeigen das Ergebnis des in Ausführungsbeispiel 2 dargestellten Experimentes.

In Figur 1 ist zunächst eine konfokale Anordnung dargestellt: Die Strahlung aus einer Strahlungsquelle 10 wird durch eine Optik 33 kollimiert und durch ein Objektiv 32 auf das zu untersuchende Substrat 60 fokussiert. Die Strahlungsquelle 10 emittiert Licht verschiedener Wellenlängen. Auswechselbare optische Mittel 35 mit wellenlängenabhängiger Brechkraft trennen dieses Licht in Bündel unterschiedlicher Konvergenz, die vom Objektiv 32 in unterschiedlichen Positionen fokussiert werden, so daß ein Hilfsfokus 71 und ein Meßvolumen 70 generiert werden. Durch die Wahl der Linse 35 kann somit der gewünschte Abstand zwischen Hilfsfokus 71 und Meßvolumen 70 vom Anwender eingestellt werden. In der beispielhaft dargestellten Anordnung liegt der Hilfsfokus 71 auf der Grenzfläche 62 zwischen Substrat 60 und Träger 61, das Meßvolumen 70 hingegen innerhalb des Substrates 60. Aus dem Meßvolumen 70 austretende Streuoder Fluoreszenzstrahlung wird wiederum durch das Objektiv 32 gebündelt und über den Strahlteiler 40, der z. B. als teildurchlässiger oder wellenlängenabhängiger Spiegel ausgeführt sein kann, ganz oder teilweise reflektiert. Die reflektierte Strahlung wird durch eine Optik 30 auf eine Blende 50 fokussiert. die zum Meßvolumen 70 konfokal angeordnet ist. Die durch die Blende 50 hindurchtretende Strahlung fällt auf den Detektor 20, der zur Aufnahme des Meßsignals dient. Bei Verwendung der Mehrphotonenanregung kann auf die Blende 50 verzichtet werden.

Über einen weiteren Strahlteiler 41, eine Optik 31 und eine ebenfalls konfokal angeordnete Blende 51 wird ein Teil der an der Grenzfläche 62 reflektierten Strahlung aus dem Hilfsfokus 71 auf den Detektor 21 gelenkt. In der in Figur 1 dargestellten Ausführungsform wird beispielsweise das fokussierende objektiv 32 entlang der optischen Achse aufund abbewegt werden, um somit die aktuelle Position des Hilfsfokus 71 relativ zur Grenzfläche 62 bestimmen und ggf. nachregein zu können. Hierdurch erfolgt eine mittelbare Nachführung des Meßvolumens 70.

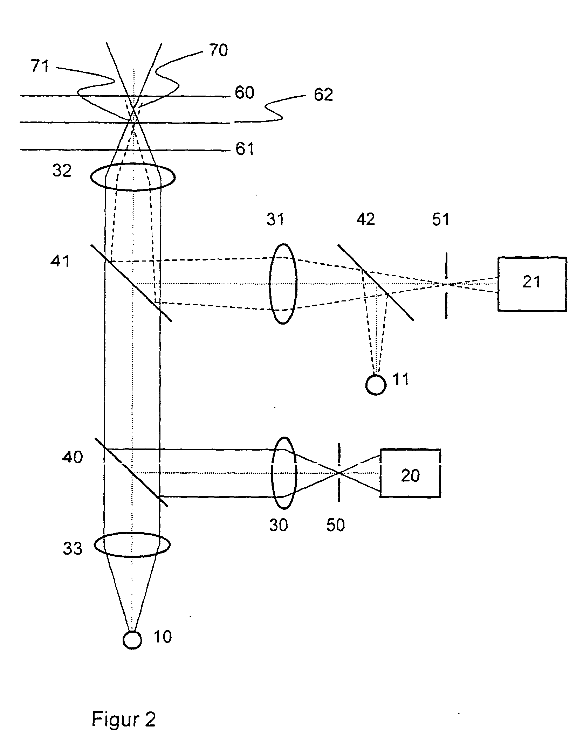

Figur 2 zeigt eine erfindungsgemäße Variante der konfokalen Anordnung, in der Meßvolumen 70 und Hilfsfokus 71 entlang der optischen Achse getrennt voneinander angeordnet sind. Die konventionelle konfokate Strahlungsund Detektionseinheit aus Strahlungsquelle 10, Detektor 20 und den zugehörigen optischen Elementen wurde bereits in Figur 1 erörtert. In dieser Ausführungsform wird eine separate Strahlungsquelle 11 zur Erzeugung des Hilfsfokus 71 verwendet. Durch die Optik 31 wird das vom Strahlteiler 42 reflektierte Licht dieser Strahlungsquelle im gezeigten Beispiel zu einem konvergenten Strahl gebündelt. so daß der vom Objektiv 32 erzeugte Hilfsfokus 71 in einem geringeren Abstand vom Objektiv 32 liegt als das Meßvolumen 70, das durch Fokussierung eines parallelen Strahlenbündels durch das Objektiv 32 entsteht. Der Hilfsfokus 71 ist wiederum auf der Grenzfläche 62 zwischen Substrat 60 und Träger 61. angeordnet; die an der Grenzfläche 62 reflektierte Strahlung wird über das Objektiv 32 und die Optik 31 auf die konfokal angeordnete Blende 51 fokussiert und vom Detektor 21 erfaßt. Durch geeignete Positionierung der Optik 31 kann in dieser Ausführung der Hilfsfokus 71 in einer wählbaren Distanz vom Meßvolumen 70 angeordnet werden. Es ist bevorzugt, den Hilfsfokus 71 auf der Grenzfläche 62 zu positionieren und das Meßvolumen 70 in einem gewünschten Abstand vom Hilfsfokus 71 innerhalb des Substrates 60 zu erzeugen. In einer weiteren Ausführungsform kann der Hilfsfokus 71 aus einem vor dem Objektiv 32 divergenten Strahlenbündel erzeugt werden, so daß der Hilfsfokus 71 in einer größeren Entfernung vom Objektiv 32 als das Meßvolumen 70 angeordnet ist. Der in Figur 1 beschriebene Suchund Regelmechanismus kann auch hier vorteilhafterweise angewendet werden.

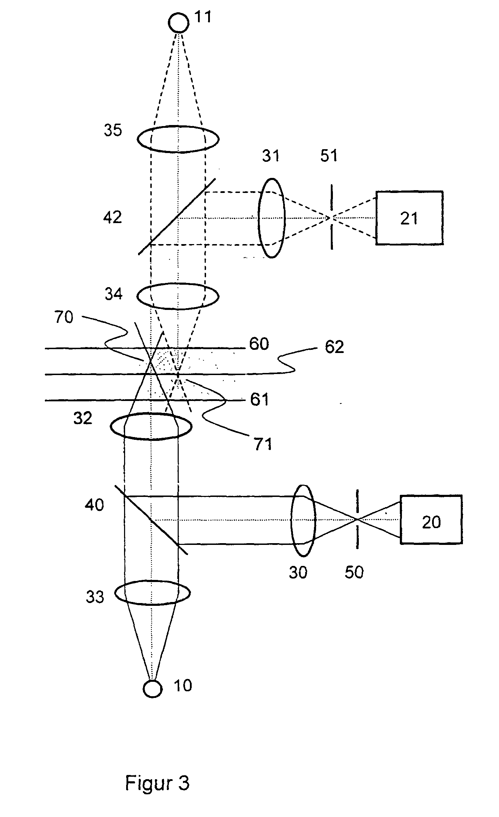

Figur 3 stellt eine weitere erfindungsgemäße Ausgestaltung dar, in der ein separates Objektiv 34 zur Erzeugung des Hilfsfokus 71 eingesetzt wird. Das Meßvolumen 70 wird wiederum über das Objektiv 32 erzeugt und abgebildet; die dem Objektiv 32 nachgeordneten Komponenten der konventionellen konfokalen Anordnung sind bereits in Figur 1 erörtert worden. Die Objektive 32 und 34 sind steuerungstechnisch oder mechanisch miteinander gekoppelt. Zur Erzeugung des Hilfsfokus 71 wird eine separate Strahlungsquelle 11 verwendet, deren Strahlung über eine Optik 35 kollimiert und durch das Objektiv 34 auf die Grenzfläche 62 zwisehen Substrat 60 und Träger 61 fokussiert wird. Die in dem Hilfsfokus 71 reflektierte Strahlung wird wiederum durch das Objektiv 34 gebündelt und über den Strahlteiler 42 reflektiert. Die reflektierte Strahlung wird durch eine Optik 31 auf eine zum Hilfsfokus 71 konfokale Blende 51 fokussiert; die durch die Blende 51 hindurchtretende Strahlung fällt auf den Detektor 21. In der beispielhaft dargestellten Anordnung sind Hilfsfokus 71 und Meßvolumen 70 sowohl in axialer wie auch lateraler Richtung getrennt voneinander angeordnet. Der in Figur 1 beschriebene Such- und Regelmechanismus kann auch hier vorteilhafterweise angewendet werden.

Figur 4 zeigt eine Variante der in Figur 2 dargestellten Ausführung der Erfindung, in der zwei Detektoren 21, 22 für das aus dem Hilfsfokus 71 reflektierte Licht eingesetzt werden. Entsprechende Anordnungen von zwei oder mehr Detektoren können auch in den Ausführungen gemäß Figur 1 oder 3 verwendet werden. Die konventionelle Anordnung zur Bestrahlung und Beobachtung des Meßvolumens 70 ist ausgeführt wie in Figur 1 erörtert. Meßvolumen 70 und Hilfsfokus 71 sind in der beispielhaft gezeigten Anordnung deckungsgleich eingestellt. Durch andere Positionierung der Linsen 30 - 35 können jedoch gewünschte Abstände zwischen Meßvolumen 70 und Hilfsfokus 71 eingestellt werden.

Der Hilfsfokus 71 liegt wiederum auf der Grenzfläche 62 zwischen Substrat 60 und Träger 61. Die an der Grenzfläche 62 reflektierte Strahlung wird durch das Objektiv 32 und den Strahlteiler 41 in Richtung der Detektoren 21, 22 gelenkt. Die Strahlung wird mittels eines weiteren Strahlteilers 43 auf die Detektoren 21, 22 aufgeteilt. Vor beiden Detektoren sind fokussierende Optiken 34, 35 sowie Blenden 51, 52 angeordnet. Die Blenden 51 und 52 sind dabei vor bzw. hinter der jeweiligen konfokalen Position angeordnet, wenn der Hilfsfokus 71 auf der Grenzfläche 62 liegt. Verändert sich nunmehr die relative Lage von Hilfsfokus 71 und Grenzfläche 62 zueinander, so werden die Detektoren 21, 22 eine veränderte Intensitätsverteilung des Rückreflexes erfassen. Abhängig von der Richtung der Lageänderung des Hilfsfokus 71, der in Richtung des Substrates 60 oder des Trägers 61 verschoben sein kann, wird entweder auf dem Detektor 21 oder dem Detektor 22 eine erhöhte bzw. erniedrigte Intensität der aus dem Hilfsfokus 71 stammenden Strahlung auftreffen. Dementsprechend kann auf die in Figur 1 beschriebene Suchbewegung verzichtet werden.

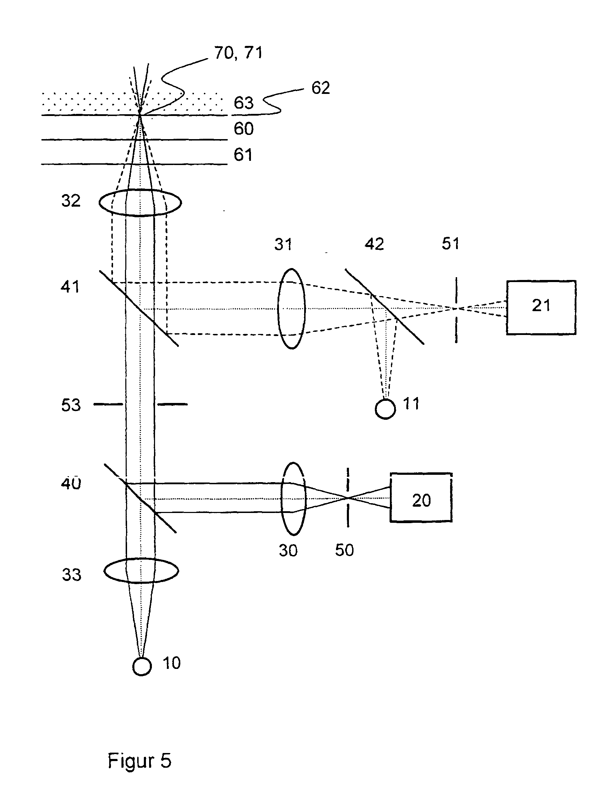

Figur 5 zeigt eine weitere Variante der in Figur 2 dargestellten Ausführung der Erfindung. Die konventionelle Anordnung zur Bestrahlung und Beobachtung des Meßvolumens 70 wurde bereits erörtert. Meßvolumen 70 und Hilfsfokus 71 sind in der beispielhaft gezeigten Anordnung deckungsgleich eingestellt; ihre relative Lage zueinander kann jedoch durch geeignete Positionierung der Linse 31 verändert werden. Als Grenzfläche 62 dient nunmehr der Übergang zwischen Substrat 60 und angrenzender Luft 63. Das für die Erzeugung des Meßvolumens 70 verwendete Objektiv 32 wird hinsichtlich ihrer Numerischen Apertur nur teilweise genutzt. Hingegen erfolgt eine breitere Austeuchtung des Objektive 32 zur Erzeugung des Hilfsfokus 71. Durch die Blende 53 wird bei der Abbildung des Meßvolumens 70 auf die konfokal angeordnete Blende 50 und ihren korrespondierenden Detektor 20 ebenfalls die Numerische Apertur des Detektionsstrahlenganges begrenzt. Diese Ausführungsform resultiert in einer geringeren Fokusgröße von Hilfsfokus 71 im Vergleich zum Meßvolumen 70. Somit kann die Amplitude der oben beschriebenen Suchbewegungen des Hilfsfokus 71 so klein gewählt werden, daß die Meßwertaufnahme aus dem Meßvolumen 70 nahezu unbeeinflußt bleibt und dennoch etwaige Abweichungen des Hilfsfokus 71 von der Grenzfläche 62 erkannt und korrigiert werden können.

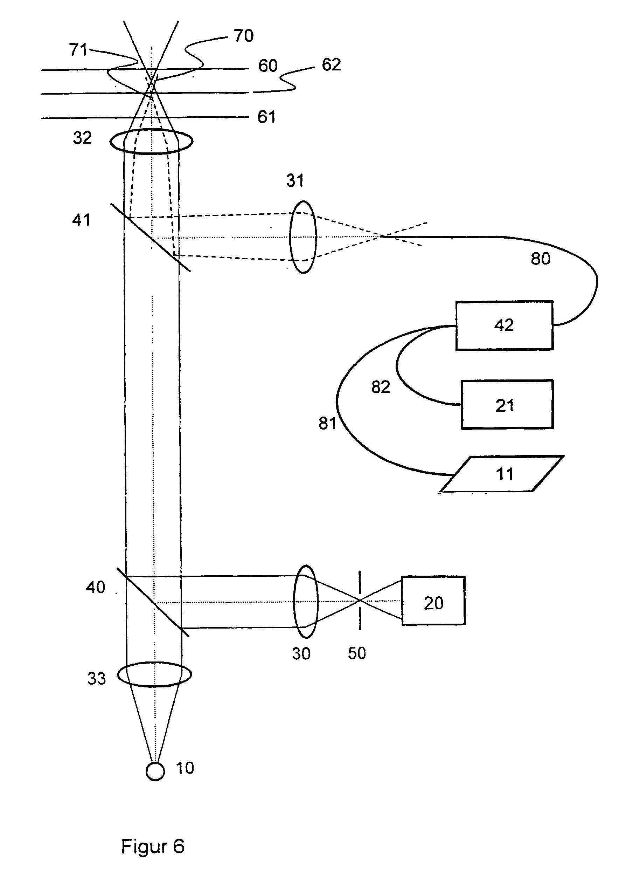

Figur 6 zeigt eine weitere Ausgestaltung des optischen Aufbaus zur Durchführung des erfindungsgemäßen Verfahrens in Anlehnung an Figur 2. Die konventionelle Anordnung zur Bestrahlung und Beobachtung des Meßvolumens 70 wurde bereits erörtert. Als Strahlungsquelle 11 zur Erzeugung des Hilfsfokus 71 wird bevorzugt ein Halbleiterlaser eingesetzt, dessen Ausgangsstrahlung in eine optische Faser 81 eingekoppelt wird. Der faseroptische Koppler 42 entspricht dem "klassischen" Strahlteiler in Figur 2. Die Strahlung aus dem Hilfsfokus 71 wird in dieser Ausführung in den Kern einer optischen Faser 80 eingekoppelt, der die in Figur 2 dargestellte Lochblende 51 in ihrer Funktion ersetzt. Nach Passieren des faseroptischen Kopplers 42 wird die Strahlung mittels einer optischen (Faser 82 auf einen Detektor 21 geleitet. Die optischen Fasern können Monomode- oder Multimodefasern sein.

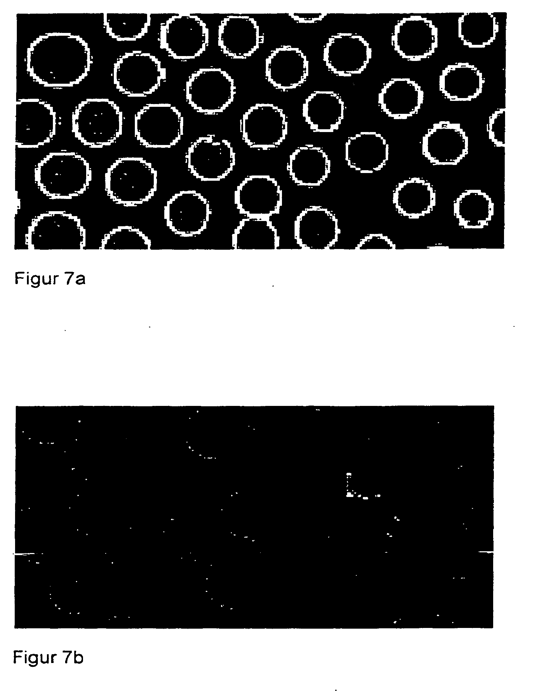

Figur 7 a zeigt Theophyllin-Beads, die mit den nachfolgend im Zusammenhang mit dem Ausführungsbeispiel 2 genannten Antikörpern versetzt wurden. Die hohe Auflösung zeigt, daß sich die lokal erhöhte Konzentration fluoreszenter Antikörper am Bead deutlich vom Hintergrundsignal der in Lösung befindlichen fluoreszenten Antikörper unterscheidet. Figur 7 b zeigt die Negativkontrolle ohne Zusatz des ersten Antikörpers, so daß der zweite fluoreszenzmarkierte Antikörper sich nicht an das Bead anlagert und im Bild die charakteristische Ringstruktur erzeugt.

Nachfolgend wird in Ausführungsbeispiel 1 eine spezifische Ausgestaltung des erfindungsgemäßen Verfahrens sowie in Ausführungsbeispiel 2 eine konkrete biologische Anwendung detailliert dargestellt.

### Ausführundsbeispiel 1

Das vorliegende Ausführungsbeispiel entspricht im wesentlichen dem in Figur 6 dargestellten Aufbau. Als Strahlungsquelle zur Erzeugung des Hilfsfokus 71 wird ein Halbleiterlaser 11 mit einer Leistung von 3 mW und einer Wellenlänge von 780 nm eingesetzt. Die Ausgangsstrahlung des Lasers 11 wird über eine Monomode-Glasfaser 81 zu einem faseroptischen Y-Koppler 42 geführt. Eine weitere Monomode-Glasfaser 80 am Ausgang des Kopplers 42 dient sowohl zur Zuführung der Strahlung für den Hilfsfokus 71, als auch zur konfokalen Detektion des an der Grenzfläche 62 reflektierten Lichtes.

Zur Bündelung der zugeführten bzw. detektierten Strahlung dient ein Achromat 31 mit einer Brennweite von 40 mm. Durch Änderung des Abstandes zwischen dem freien Ende der Faser 80 und dem Achromaten 31 kann die Konvergenz des zum Objektiv 32 geführten Strahlenbündels, und damit die Lage des Hilfsfokus 71 relativ zum Meßvolumen 70, variiert werden. In der hier beschriebenen Ausführung ist durch eine Verschiebung des Achromaten 31 über insgesamt 5 mm die Distanz zwischen Meßvolumen 70 und Hilfsfokus 71 zwischen 0 µm und 100 µm einstellbar.

Das hier eingesetzte Objektiv 32 ist ein Standard-Mikroskopobjektiv mit 40-facher Vergrößerung und einer Numerischen Apertur von 1,2. Es ist auf einem piezoelektrischen Translator montiert, der eine Verschiebung des Objektivs entlang der optischen Achse über eine Strecke von 100 µm ermöglicht. Die Grenzfrequenz für diese Bewegung liegt, bedingt durch die Antriebskraft des Translators sowie die Masse des eingesetzten Objektivs, bei etwa 400 Hz.

Als Grenzfläche 62 wird in dieser beispielhaften Ausführung der Übergang von einem gläsemen Träger 61 (Brechungsindex n₁ ≈ 1.52) zum Substrat 60, das in diesem Fall aus einer wäßrigen Suspension von polymeren Kugeln (Brechungsindex n₂ ≈ 1.33) besteht, verwendet. Die von der Grenzfläche 62 reflektierte Strahlung wird über das Objektiv 32 und den Achromaten 31 wiederum auf die Faser 80 gelenkt, deren optischer Kern die Funktion der in Figur 1 bis 5 dargestellten Lochblende 51 übernimmt, also eine konfokale Detektion gewährleistet. Über den Koppler 42 gelangen 50% der Strahlungsleistung auf den Detektor 21, der als Silizium-Photodiode mit nachgeschaltetem Transimpedanzverstärker (Verstärkung 10⁸ V/A) ausgeführt ist.

Das Ausgangssignal des Detektors 21 wird über einen 14-Bit Analog-Digital-Wandler einem digitalen Signalprozessor (DSP) zugeführt. Dieser DSP steuert über einen 14-Bit Digital-Analog-Wandler und einen nachgeschalteten Hochspannungsverstärker auch den piezoelektrischen Translator des Objektivs 32. Zur Steuerung der Nachführung wird das Objektiv mit einer typischen Frequenz von 200 Hz und einer Amplitude von 0,5 µm sinusförmig auf- und abbewegt. Über eine zu dieser Suchbewegung synchrone Demodulation der vom Detektor 21 aufgenommenen Intensität bestimmt der DSP die Richtung einer eventuellen Abweichung zwischen der Position der Grenzfläche 62 und der (über die sinusförmige Bewegung zeitlich gemittelten) Position des Hilfsfokus 71. Eine ggf. festgestellte Abweichung wird durch eine der Sinusbewegung überlagerte Nachführung des Objektivs 32 ausgeglichen.

In der konfokalen Meßeinrichtung wird als Detektor 20 eine aktiv gequenchte Avalanche Photodiode eingesetzt. Die Lochblende 50 weist einen Durchmesser von 50 µm auf. Als Strahlungsquelle 10 dient ein HeNe-Laser mit 543 nm Ausgangswellenlänge, dessen Lichtleistung auf 100 µW abgeschwächt wird.

### Ausführungsbeispiel 2

Im vorliegenden Ausführungsbeispiel werden als Substrat sog. Tenta-Gel™ - Beads des Typs S PHB-Gly (RAPP Polymere) eingesetzt. Diese sind konjugiert mit Theophyllinmolekülen (Aldrich) als Entitäten. Die Beladung der Beads beträgt 9%. 5 mg der Beads werden in 444 µl PBS-Puffer suspendiert. Als Probenträger werden Lab-Tek Chambered Covergtasses, #1 Borosilicat, steril, 8-well (Nunc Nalge International, Lot.Nr. 148116-0605) verwendet. Als erster Antikörper wird ein polyklonaler Kaninchen Anti-Theopyllin-Antikörper (Europa Research, Lot.Nr. 80 17 15) verwendet. Als zweiter Antikörper dient ein ftuoreszenzmarkterter (TRITC, Tetramethylrhodamin-5-(und 6)-isothiocyanat) Anti-Kaninchen-IgG-Antikörper (DAKO, Lot.Nr. 077(101)). Der Assaypuffer, nachfolgend TNT genannt, setzt sich wie folgt zusammen: 50 mM Tris-HCI pH 7.5, 100 mM NaCl, 0.01% Tween-20.

Der Assay wird wie folgt durchgeführt: 8 µl Beadsuspension werden mit 100 µl einer 1:2000 Verdünnung des ersten Antikörpers versetzt und für 30 min. bei Raumtemperatur geschüttelt. Es folgt ein zweimaliger Waschschritt mit TNT-Puffer (0.01% Tween-20). 100 µl einer Verdünnung 1:5000 des zweiten Antikörpers werden zugesetzt und für eine Stunde bei Raumtemperatur geschüttelt. Sodann werden 200 µl TNT-Puffer zugesetzt.

Zur Erzeugung des Anregungsstrahlenganges hinsichtlich des Meßvotumens 70 wird ein HeNe-Laser mit einer Emissionswellenlänge von 543 nm eingesetzt. Als für das Fluoreszenzspektrum von TRITC geeigneter Bandpaßfilter wird detektionsseitig ein Bandpaß mit einer mittleren Durchlaß-Wellenlänge von 580 nm und einer Halbwertsbreite von 30 nm eingesetzt.

Das Ergebnis des Ausführungsbeispieles 2 ist in den Figuren 7 a und b dargestellt. Die aufgenommenen Meßwerte werden zunächst einem Bildverarbeitungsschritt unterzogen, der dazu dient, die einzelnen Beads zu identifizieren und zu lokalisieren. In der hier beschriebenen Ausführung wird hierzu die Hough-Transformation verwendet. Im Anschluß werden zu jedem identifizierten Bead diejenigen Meßwerte ermittelt, die Punkte auf der Beadoberfläche kennzeichnen. Hierzu ist es vorteilhaft, a-prioriinformationen einzusetzen, wie etwa in diesem Fall die Erwartung, daß die optischen Schnitte durch die Beadoberfläche annähernd kreisförmige Strukturen ergeben. Im vorliegenden Fall werden, jeweils entlang radial vom Zentrum der identifizierten Beads ausgehender Suchbahnen, die Meßwerte maximaler Intensität ermittelt. Alternativ können in diesem Schritt aus der Literatur bekannte Verfahren wie Kantenverstärkung und/oder Schwellwertanalyse verwendet werden.

## Patentansprüche

1. Verfahren zur optischen Erfassung mindestens einer Entität, bei der es sich um Moleküle, Molekülkomplexe, Polymere, polymere Partikel, aus anorganischen Materialien aufgebaute Partikel, vesikuläre Strukturen, Zellen, Bakterien oder Viren handelt, wobei
- die mindestens eine Entität auf und/oder in einem, bevorzugt auf einem Träger (61) befindlichen, Substrat (60) angeordnet ist, dessen Brechungsindex verschieden ist von mindestens einer an das Substrat (60) angrenzenden Komponente,
- die mindestens eine Entität mit einem Messvolumen (70) unter Verwendung mindestens einer konfokalen oder für die Mehrphotonenanregung ausgelegten Einrichtung, bestehend aus einer ersten Strahlungsquelle (10) und mindestens einem ersten Objektiv (32), unter Erhalt von Messwerten optischer Parameter gescannt. wird und die Messwerte zur Charakterisierung der mindestens einen Entität mittels Signalverarbeitung bearbeitet werden,
- die mindestens eine Entität für die Dauer der Aufnahme der Messwerte ihre Position hinsichtlich des Substrates (60) und/oder des Trägers (61) im wesentlichen beibehält,
- vor und/oder während des Scanvorganges ein Hilfsfokus (71) unter Verwendung mindestens einer zweiten Strahlungsquelle (11) und eines zweiten Objektivs (34) erzeugt wird, der zumindest teilweise auf der Grenzfläche (62) zwischen Substrat (60) und angrenzender Komponente oder einer sonstigen in definierter räumlicher Beziehung zur Entität stehenden Grenzfläche (62) liegt,
- die von der ersten Strahlungsquelle (10) erzeugte Strahlung durch eine erste Optik (33) kollimiert wird und die von der zweiten Strahlungsquelle (11) erzeugte Strahlung durch eine hiervon verschiedene zweite Optik (31) kollimiert wird,
- ein Rückreflex aus dem Hilfsfokus (71) von einem Detektor (21) mit einer konfokal angeordneter Blende (51) oder von mehreren Detektoren (21,22) mit entlang der optischen Achse des den Hilfsfokus (71) erzeugenden Objektivs (34) vor und/oder hinter der Bildebene angeordneten Blenden (51,52) erfasst wird und zur Messung der Lage der Grenzfläche (62) und somit zur mittelbaren Positionierung des Messvolumens (70) genutzt wird, und
- die Position des Hilfsfokus (71) relativ zum Messvolumen (70) definiert eingestellt ist oder variabel einstellbar ist.

2. Verfahren zur optischen Erfassung mindestens einer Entität, bei der es sich um Moleküle, Molekülkomplexe, Polymere, polymere Partikel, aus anorganischen Materialien aufgebaute Partikel, vesikuläre Strukturen, Zellen, Bakterien oder Viren handelt, wobei
- die mindestens eine Entität auf und/oder in einem, bevorzugt auf einem Träger (61) befindlichen, Substrat (60) angeordnet ist, dessen Brechungsindex verschieden ist von mindestens einer an das Substrat (60) angrenzenden Komponente,
- die mindestens eine Entität mit einem Messvolumen (70) unter Verwendung mindestens einer konfokaien oder für die Mehrphotonenanregung ausgelegten Einrichtung, bestehend aus einer ersten Strahlungsquelle (10) und mindestens einem Objektiv (32), unter Erhalt von Messwerten optischer Parameter gescannt wird und die Messwerte zur Charakterisierung der mindestens einen Entität mittels Signalverarbeitung bearbeitet werden,
- die mindestens eine Entität für die Dauer der Aufnahme der Messwerte ihre Position hinsichtlich des Substrates (60) und/oder des Trägers (61) im wesentlichen beibehält,
- vor und/oder während des Scanvorganges ein Hilfsfokus (71) unter Verwendung mindestens einer zweiten Strahlungsquelle (11) und des Objektivs (32) erzeugt wird, der zumindest teilweise auf der Grenzfläche (62) zwischen Substrat (60) und angrenzender Komponente oder einer sonstigen in definierter räumlicher Beziehung zur Entität stehenden Grenzfläche (62) liegt,
- die von der ersten Strahlungsquelle (10) erzeugte Strahlung durch eine erste Optik (33) kollimiert wird und die von der zweiten Strahlungsquelle (11) erzeugte Strahlung durch eine hiervon verschiedene zweite Optik (31) kollimiert wird,
- ein Rückreflex aus dem Hilfsfokus (71) von einem Detektor (21) mit einer konfokal angeordneten Blende (51) oder von mehreren Detektoren (21,22) mit entlang der optischen Achse des den Hilfsfokus (71) erzeugenden Objektivs (32) vor und/oder hinter der Bildebene angeordneten Blenden (51,52) erfasst wird und zur Messung der Lage der Grenzfläche (62) und somit zur mittelbaren Positionierung des Messvolumens (70) genutzt wird, und
- die Position des Hilfsfokus (71) retativ zum Messvolumen (70) definiert eingestellt ist oder variabel einstellbar ist.

3. Verfahren nach Anspruch 1 und/oder 2, **dadurch gekennzeichnet, dass** die Ausdehnung des konfokal detektierten Volumens des Hilfsfokus (71) insbesondere in Richtung der jeweiligen optischen Achsen der Objektive (32, 34) geringer ist als die Ausdehnung des Messvolumens (70).

4. Verfahren nach Anspruch 3, **dadurch gekennzeichnet, dass** zwecks Erzielung der geringeren Ausdehnung des konfokal detektierten Volumens des Hilfsfokus (71) dieser mittels eines zweiten Objektivs (34) mit einer Numerischen Apertur erzeugt wird, die größer ist als die Numerische Apertur des zur Erzeugung des Messvolumens (70) verwendeten ersten Objektivs (32).

5. Verfahren nach Anspruch 3, **dadurch gekennzeichnet, dass** zwecks Erzielung der geringeren Ausdehnung des konfokal detektierten Volumens des Hilfsfokus (71) zur Erzeugung des Messvolumens (70) ein geringerer Teil der Numerischen Apertur eines gemeinsamen oder der jeweiligen Objektive (32, 34) genutzt wird als zur Erzeugung des Hilfsfokus (71).

6. Verfahren nach Anspruch 3, **dadurch gekennzeichnet, dass** zwecks Erzielung der geringeren Ausdehnung des konfokal detektierten Volumens des Hilfsfokus (71) eine konfokal angeordnete Blende (51) bei der Detektion des Hilfsfokus (71) verwendet wird, die eine geringere Öffnung aufweist als eine bei der Detektion des Messvolumens (70) verwendete, konfokal angeordnete Blende (50).

7. Verfahren nach einem der Ansprüche 1 bis 6, **dadurch gekennzeichnet, dass** zur mittelbaren Positionierung des Messvolumens (70) die Position des Hilfsfokus (71) relativ zur Grenzfläche (62) im wesentlichen entlang der optischen Achse des den Hilfsfokus (71) erzeugenden Objektivs (34) bevorzugt periodisch bewegt wird, die Intensität des Rückreflexes in Abhängigkeit von der Bewegung von dem Detektor (21) registriert wird und die Lage des Hilfsfokus (71) derart nachgeregelt wird, dass die Intensität des Rückreflexes ihr Maximum erreicht.

8. Verfahren nach einem der Ansprüche 1 bis 6, **dadurch gekennzeichnet, dass** zur mittelbaren Positionierung des Messvolumens (70) die Position des Hilfsfokus (71) relativ zur Grenzfläche (62) sowohl lateral zur optischen Achse des den Hilfsfokus (71) erzeugenden Objektivs (34) als auch axial bewegt wird.

9. Verfahren nach Anspruch 7 und/oder 8, **dadurch gekennzeichnet, dass** die Amplitude der bevorzugt periodischen Bewegung des Hilfsfokus (71) kleiner als oder gleich der axialen Ausdehnung des Messvolumens (70) ist.

10. Verfahren nach einem der Ansprüche 1 bis 6, **dadurch gekennzeichnet, dass** die Intensität des Rückreflexes mittels mindestens zweier Detektoren (21,22) erfasst wird und die Lage der Grenzfläche (62) aus der Verteilung der von den Detektoren (21,22) erfassten Intensitäten bestimmt wird.

11. Verfahren nach einem der Ansprüche 1 bis 10, **dadurch gekennzeichnet, dass** als optische Parameter die Streulichtintensität und/oder die Streulichtintensität in Abhängigkeit von der Polarisation und/oder die Fluoreszenzintensität bei mindestens einer Wellenlänge und/oder die Fluoreszenzintensität in Abhängigkeit von der Polarisation und/oder die Fluoreszenzlebensdauer und/oder molekulare Helligkeiten und/oder Raman-Streuung und/oder Lumineszenz aufgenommen werden.

12. Verfahren nach einem der Ansprüche 1 bis 11, **dadurch gekennzeichnet, dass** mineralische oder organische Substrate (60), insbesondere polymere Gele, polymere Partikel, aus anorganischen Materialien aufgebaute Partikel, vesikuläre Strukturen, Zellen, Bakterien und Viren eingesetzt werden.

13. Verfahren nach einem der Ansprüche 1 bis 12, **dadurch gekennzeichnet, dass** anhand der optischen Parameter ausgewählte Entitäten und/oder Substrate (60) während oder im Anschluss an den Scanvorgang von den übrigen Entitäten und/oder Substraten (60) getrennt werden.

14. Verwendung des Verfahrens nach einem der Ansprüche 1 bis 13 für die WirkstofFsuche, die funktionale Analyse kombinatorisch-chemischer oder Wirkstoffsuche, die funktionale Analyse kombinatorisch-chemischer oder kombinatorisch-biologischer Syntheseprodukte, die funktionale Genomanalyse, die evolutive Biotechnologie, die Diagnostik, die Proteom-Analyse oder die Materialuntersuchung.

15. Vorrichtung zur Durchführung des Verfahrens nach Anspruch 1 zur optischen Erfassung mindestens einer Entität, bei der es sich um Moleküle, Molekülkomplexe, Polymere, polymere Partikel, aus anorganischen Materialien aufgebaute Partikel, vesikuläre Strukturen, Zellen, Bakterien oder Viren handelt, mit
- mindestens einer ersten Strahlungsquelle (10) sowie mindestens einer konfokalen oder für die Mehrphotonenanregung ausgelegten Einrichtung bestehend aus einem ersten Objektiv (32) und mindestens einem ersten Detektor (20) zur Aufnahme von Messwerten aus einem Messvolumen (70),
- mindestens einer zweiten Strahlungsquelle (11) sowie mindestens einer weiteren Einrichtung bestehend aus einem zweiten Objektiv (34) und einem zur Aufnahme eines Rückreflexes aus einem Hilfsfokus (71) vorgesehenen zweiten Detektor (21) mit einer konfokal angeordneten Blende (51) oder mehreren zur Aufnahme eines Rückreflexes aus einem Hilfsfokus (71) vorgesehenen zweiten Detektoren (21,22) mit entlang der optischen Achse des den Hilfsfokus (71) erzeugenden zweiten Objektivs (34) vor und/oder hinter der Bildebene angeordneten Blenden (51,52),
- mindestens einer Einrichtung zur Positionierung von Messvolumen (70) und Hilfsfokus (71) relativ zu einem Substrat (60), wobei der Hilfsfokus (71) zumindest teilweise an einer Grenzfläche (62) zwischen Substrat (60) und einer an dieses angrenzenden Komponente oder an einer sonstigen in definierter räumlicher Beziehung zur Entität stehenden Grenzfläche (62) liegt und durch den Rückreflex aus dem Hilfsfokus (71) die Lage der Grenzfläche (62) messbar und somit mittelbar das Messvolumen (70) positionierbar ist,
- einer Einrichtung zur variablen Positionierung des Hilfsfokus (71) relativ zum Messvolumen (70),
- einer ersten Optik (33), die die von der ersten Strahlungsquelle (10) erzeugte Strahlung kollimiert, und
- einer hiervon verschiedenen zweiten Optik (31), die die von der zweiten Strahlungsquelle (11) erzeugte Strahlung kollimiert.

16. Vorrichtung zur Durchführung des Verfahrens nach Anspruch 2 zur optischen Erfassung mindestens einer Entität, bei der es sich um Moleküle, Moleküfkompfexe, Polymere, polymere Partikel, aus anorganischen Materialien aufgebaute Partikel, vesikuläre Strukturen, Zellen, Bakterien oder Viren handelt, mit
- mindestens einer ersten Strahlungsquelle (10) sowie mindestens einer konfokalen oder für die Mehrphotonenanregung ausgelegten Einrichtung bestehend aus einem Objektiv (32) und mindestens einem ersten Detektor (20) zur Aufnahme von Messwerten aus einem Messvolumen (70),
- mindestens einer zweiten Strahlungsquelle (11) sowie mindestens einer weiteren Einrichtung bestehend aus demselben Objektiv (32) und einem zur Aufnahme eines Rückreflexes aus einem Hilfsfokus (71) vorgesehenen zweiten Detektor (21) mit einer konfokal angeordneten Blende (51) oder mehreren zur Aufnahme eines Rückreflexes aus einem Hilfsfokus (71) vorgesehenen zweiten Detektoren (21,22) mit entlang der optischen Achse des den Hilfsfokus (71) erzeugenden Objektivs (32) vor und/oder hinter der Bildebene angeordneten Blenden (51,52),
- mindestens einer Einrichtung zur Positionierung von Messvolumen (70) und Hilfsfokus (71) relativ zu einem Substrat (60), wobei der Hilfsfokus (71) zumindest teilweise an einer Grenzfläche (62) zwischen Substrat (60) und einer an dieses angrenzenden Komponente oder an einer sonstigen in definierter räumlicher Beziehung zur Entität stehenden Grenzfläche (62) liegt und durch den Rückreflex aus dem Hilfsfokus (71) die Lage der Grenzfläche (62) messbar und somit mittelbar das Messvolumen (70) positionierbar ist,
- einer Einrichtung zur variablen Positionierung des Hilfsfokus (71) relativ zum Messvolumen (70),
- einer ersten Optik (33), die die von der ersten Strahlungsquelle (10) erzeugte Strahlung kollimiert, und
- einer hiervon verschiedenen zweiten Optik (31), die die von der zweiten Strahlungsquelle (11) erzeugte Strahlung kollimiert.

17. Vorrichtung zur Durchführung des Verfahrens nach Anspruch 1 zur optischen Erfassung mindestens einer Entität, bei der es sich um Moleküle, Molekülkomplexe, Polymere, polymere Partikel, aus anorganischen Materialien aufgebaute Partikel, vesikuläre Strukturen, Zellen, Bakterien oder Viren handelt, mit
- mindestens einer ersten Strahlungsquelle (10) sowie mindestens einer konfokalen oder für die Mehrphotonenanregung ausgelegten Einrichtung bestehend aus einem ersten Objektiv (32) und mindestens einem ersten Detektor (20) zur Aufnahme von Messwerten aus einem Messvolumen (70),
- mindestens einer zweiten Strahlungsquelle (11) sowie mindestens einer weiteren Einrichtung bestehend aus einem zweiten Objektiv (34) und einem zur Aufnahme eines Rückreflexes aus einem Hilfsfokus (71) vorgesehenen zweiten Detektor (21) mit einer konfokal angeordneten Blende (51) oder mehreren zur Aufnahme eines Rückreflexes aus einem Hilfsfokus (71) vorgesehenen zweiten Detektoren (21,22) mit entlang der optischen Achse des den Hilfsfokus (71) erzeugenden zweiten Objektivs (34) vor und/oder hinter der Bildebene angeordneten Blenden (51,52),
- mindestens einer Einrichtung zur Positionierung von Messvolumen (70) und Hilfsfokus (71) relativ zu einem Substrat (60), wobei der Hilfsfokus (71) zumindest teilweise an einer Grenzfläche (62) zwischen Substrat (60) und einer an dieses angrenzenden Komponente oder an einer sonstigen in definierter räumlicher Beziehung zur Entität stehenden Grenzfläche (62) liegt und durch den Rückreflex aus dem Hilfsfokus (71) die Lage der Grenzfläche (62) messbar und somit mittelbar das Messvolumen (70) positionierbar ist,
- wobei der Hilfsfokus (71) relativ zum Messvolumen (70) definiert eingestellt ist,
- einer ersten Optik (33), die die von der ersten Strahlungsquelle (10) erzeugte Strahlung kollimiert, und
- einer hiervon verschiedenen zweiten Optik (31), die die von der zweiten Strahlungsquelle (11) erzeugte Strahlung kollimiert.

18. Vorrichtung nach Ansprüchen 15 und/oder 16, **dadurch gekennzeichnet, dass** die Einrichtung zur Positionierung von Messvolumen (70) und Hilfsfokus (71) relativ zu einem Substrat (60) Mittel zur Positionierung des Hilfsfokus (71) relativ zum Messvolumen (70) umfasst.

19. Vorrichtung nach einem der Ansprüche 15 oder 18, **dadurch gekennzeichnet, dass** die Einrichtung zur Positionierung des Hilfsfokus (71) relativ zum Messvolumen (70) Mittel zur Einstellung. der relativen Position der Objektive (32, 34) zueinander umfasst.

20. Vorrichtung nach einem der Ansprüche 15, 16, 18 oder 19, **dadurch gekennzeichnet, dass** die Einrichtung zur Positionierung des Hilfsfokus (71) relativ zum Messvolumen (70) Mittel zur Variation der Konvergenz derjenigen Strahlenbündel umfasst, welche zur Erzeugung des Hilfsfokus (71) und des Messvolumens (70) von dem jeweiligen Objektiv (32,34) fokussiert werden.

21. Verwendung der Vorrichtung nach einem der Ansprüche 15 bis 20 in der Wirkstoffsuche, der funktionalen Analyse kombinatorisch-chemischer oder kombinatorisch-biologischer Syntheseprodukte, der funktionalen Genomanalyse, der evolutiven Biotechnologie, der Diagnostik, der Proteom-Analyse oder der Materialuntersuchung.

## Claims

1. Method for optically detecting at least one entity which may be molecules, molecule complexes, polymers, polymeric particles, particles composed of anorganic materials, vesicular structures, cells, bacteria or viruses, wherein
- the at least one entity is arranged on and/or in a substrate (60), said substrate (60) preferably being arranged on a support (61) and having a refraction-index which is different from the one of at least one component adjacent to the substrate (60),
- the at least one entity is scanned with a measuring volume (70) using at least one device being confocal or configured for multi-photon-excitation, said device consisting of a radiation source (10) and at least one first objective (32), thereby receiving measuring values of optical parameters which are processed by means of signal processing for characterization of the at least one entity,
- the at least one entity substantially maintains its position with respect to the substrate (60) and/or the support (61) for the duration of the obtaining of the measuring values,
- before and/or during the scanning process an auxiliary focus (71) is generated by means of at least one second radiation source (11) and a second objective (34), said auxiliary focus being at least partly arranged on the interface (62) between substrate (60) and adjacent component or on another interface (62) having a defined spatial relation to said entity,
- the radiation generated by the first radiation source (10) is collimated by a first optic (33) and the radiation generated by the second radiation source (11) is collimated by a second optic (31) different from said first optic,
- a retroreflection from the auxiliary focus (71) is detected by a confocal arranged detector (21) or a plurality of detectors (21,22) being arranged in front of and/or behind the image-plane and along the optical axis of the optic (34) generating the auxiliary focus (71), said retroreflection is used for measuring the position of the interface (62) and, thus, for indirectly positioning the measuring volume (70), and
- the position of the auxiliary focus (71) relative to the measuring volume (70) is adjusted or adjustable in a defined manner.

2. Method for optically detecting at least one entity which may be molecules, molecule complexes, polymers, polymeric particles, particles composed of anorganic materials, vesicular structures, cells, bacteria or viruses, wherein
- the at least one entity is arranged on and/or in a substrate (60), said substrate (60) preferably being arranged on a support (61) and having a refraction-index which is different from the one of at least one component adjacent to the substrate (60),
- the at least one entity is scanned with a measuring volume (70) using at least one device being confocal or configured for multi-photon-excitation, said device consisting of a radiation source (10) and at least one objective (32), thereby receiving measuring values of optical parameters which are processed by means of signal processing for characterization of the at least one entity,
- the at least one entity substantially maintains its position with respect to the substrate (60) and/or the support (61) for the duration of the obtaining of the measuring values,
- before and/or during the scanning process an auxiliary focus (71) is generated by means of at least one second radiation source (11) and said objective (34), said auxiliary focus being at least partly arranged on the interface (62) between substrate (60) and adjacent component or on another interface (62) having a defined spatial relation to said entity,
- the radiation generated by the first radiation source (10) is collimated by a first optic (33) and the radiation generated by the second radiation source (11) is collimated by a second optic (31) different from said first optic,
- a retroreflection from the auxiliary focus (71) is detected by a confocal arranged detector (21) or a plurality of detectors (21,22) being arranged in front of and/or behind the image-plane and along the optical axis of the optic (34) generating the auxiliary focus (71), said retroreflection is used for measuring the position of the interface (62) and, thus, for indirectly positioning the measuring volume (70), and
- the position of the auxiliary focus (71) relative to the measuring volume (70) is adjusted or adjustable in a defined manner.

3. Method according to claim 1 and/or 2, **characterized in that** the extent of the confocal detected volume of the auxiliary focus (71), in particular in the direction of the respective optical axes of the objectives (32,34), is smaller than the extent of the measuring volume (70).

4. Method according to claim 3, **characterized in that** the auxiliary focus (71) for obtaining a smaller extent of the confocal detected volume of the auxiliary focus (71) is generated by a second optic (34) having a numeric aperture which is larger than the numeric aperture of the first optic (32) used for generating the measuring volume (70).

5. Method according to claim 3, **characterized in that** for obtaining the small extent of the confocal detected volume of the auxiliary focus (71) the smaller part of the numerical aperture of a common optic or the respective optics (32,34) is used for generating the measuring volume (70) than for generating the auxiliary focus (71).

6. Method according to claim 3, **characterized in that** for obtaining the small extent of the confocal detected volume of the auxiliary focus (71) a confocal arranged diaphragm (51) is used at the detection of the auxiliary focus (71), said diaphragm (51) having a smaller opening than a confocal arranged diaphragm (50) used at the detection of the measuring volume (70).

7. Method according to one of claims 1 to 6, **characterized in that** for indirectly positioning the measuring volume (70) the position of the auxiliary focus (71) relative to the interface (62) is moved preferably periodically substantial along the optical axis of the optic (34) generating the auxiliary focus (71), the intensity of the retroreflection in dependence on the movement of the detector (21) is registered and the position of the auxiliary focus (71) is readjusted in a manner that the intensity of the retroreflection reaches its maximum.

8. Method according to one of claims 1 to 6, **characterized in that** for indirectly positioning the measuring volume (70) the position of the auxiliary focus (71) relative to the interface (72) is moved both laterally to the optical axis of the optic (34) generating the auxiliary focus (71) and axially.

9. Method according to claim 7 and/or 8, **characterized in that** the amplitude of the preferably periodical movement of the auxiliary focus (71) is smaller than or equal to the axial extent of the measuring volume (70).

10. Method according to one of claims 1 to 6, **characterized in that** the intensity of the retroreflection is detected by means of at least two detectors (21,22) and the position of the interface (62) is determined by means of the distribution of the intensities detected by the detectors (21,22).

11. Method according to one of claims 1 to 10, wherein the scatter-light-intensity and/or the scatter-light-intensity in dependence on the polarization and/or the fluorescence-intensity at at least one wavelength and/or the fluorescence-intensity in dependence on the polarization and/or the fluorescence-durability and/or molecular luminosity and/or Raman-scattering and/or luminescence are detected as optical parameters.

12. Method according to one of claims 1 to 11, wherein mineral or organic substrates (60) in particular polymeric gels, polymeric particles built up from inorganic materials, vesicular structures, cells, bacteria and virus are used.

13. Method according to one of claims 1 to 12, wherein entities and/or substrates (60) selected by means of the optical parameters are separated during or after the scanning process from the other entities and/or substrates (60).

14. Method according to one of claims 1 to 13 for use in the research of active ingredients, in the functional analysis of combinatoric-chemical or combinatoric-biological synthesis-products, in the functional genom-analysis, in the evolutive biotechnology, in the diagnostics, in the proteom-analysis or the investigation of material.

15. Apparatus for performing the method according to claim 1 for optically detecting at least one entity which may be molecules, molecule complexes, polymers, polymeric particles, particles composed of anorganic materials, vesicular structures, cells, bacteria or viruses, comprising
- at least one first radiation source (10) as well as at least one device being confocal or configured for multi-photon-excitation said device comprising a first objective (32) and at least one first detector (20) for detecting measuring values from the measuring volume (70),
- at least one second radiation source (11) as well as at least one further device comprising a second objective (34) and at least one second detector (21) for detecting a retroreflection from an auxiliary focus (71) with a confocal arranged diaphragm (51) or a plurality of second detectors (21,22) for detecting a retroreflection from an auxiliary focus (71) with diaphragms (51, 52) being arranged along the optical axis of the second objective (34) generating the auxiliary focus (71) and in front of and/or behind the image plane are used,
- at least one device for positioning measuring volume (70) and auxiliary focus (71) relative to a substrate (60), said auxiliary focus being at least partly arranged on the interface (62) between substrate (60) and adjacent component or on another interface (62) having a defined spatial relation to said entity, the position of the interface (62) being measurable by means of the retroreflection from the auxiliary focus (71), whereby it is possible to indirectly position the measuring volume (70),
- a device for variably positioning the auxiliary focus (71) relative to the measuring volume (70),
- a first optic (33) collimating the radiation generated by the first radiation source (10), and
- a second optic (31) different from the first optic, which collimates the radiation generated by the second radiation source (11).

16. Apparatus for performing the method according to claim 2 for optically detecting at least one entity which may be molecules, molecule complexes, polymers, polymeric particles, particles composed of anorganic materials, vesicular structures, cells, bacteria or viruses, comprising
- at least one first radiation source (10) as well as at least one device being confocal or configured for multi-photon-excitation said device comprising an objective (32) and at least one first detector (20) for detecting measuring values from the measuring volume (70),
- at least one second radiation source (11) as well as at least one further device comprising the same objective (32) and at least one second detector (21) for detecting a retroreflection from an auxiliary focus (71) with a confocal arranged diaphragm (51) or a plurality of second detectors (21,22) for detecting a retroreflection from an auxiliary focus (71) with diaphragms (51, 52) being arranged along the optical axis of the objective (32) generating the auxiliary focus (71) and in front of and/or behind the image plane are used,
- at least one device for positioning measuring volume (70) and auxiliary focus (71) relative to a substrate (60), said auxiliary focus being at least partly arranged on the interface (62) between substrate (60) and adjacent component or on another interface (62) having a defined spatial relation to said entity, the position of the interface (62) being measurable by means of the retroreflection from the auxiliary focus (71), whereby it is possible to indirectly position the measuring volume (70),
- a device for variably positioning the auxiliary focus (71) relative to the measuring volume (70),
- a first optic (33) collimating the radiation generated by the first radiation source (10), and
- a second optic (31) different from the first optic, which collimates the radiation generated by the second radiation source (11).

17. Apparatus for performing the method according to claim 1 for optically detecting at least one entity which may be molecules, molecule complexes, polymers, polymeric particles, particles composed of anorganic materials, vesicular structures, cells, bacteria or viruses, comprising
- at least one first radiation source (10) as well as at least one device being confocal or configured for multi-photon-excitation said device comprising a first objective (32) and at least one first detector (20) for detecting measuring values from a measuring volume (70),
- at least one second radiation source (11) as well as at least one further device comprising a second objective (34) in at least one second detector (21) for detecting a retroreflection from an auxiliary focus (71) with a confocal arranged diaphragm (51) or a plurality of second detectors (21,22) for detecting a retroreflection from an auxiliary focus (71) with diaphragms (51, 52) being arranged along the optical axis of the objective (32) generating the auxiliary focus (71) and in front of and/or behind the image plane are used,
- at least one device for positioning measuring volume (70) and auxiliary focus (71) relative to a substrate (60), said auxiliary focus being at least partly arranged on the interface (62) between substrate (60) and adjacent component or on another interface (62) having a defined spatial relation to said entity, the position of the interface (62) being measurable by means of the retroreflection from the auxiliary focus (71), whereby it is possible to indirectly position the measuring volume (70),
- a device for positioning the auxiliary focus (71) in a defined condition relative to the measuring volume (70),
- a first optic (33) collimating the radiation generated by the first radiation source (10), and
- a second optic (31) different from the first optic, which collimates the radiation generated by the second radiation source (11).

18. Apparatus according to claim 15 and/or 16, **characterized in that** the device for positioning the measuring volume (70) and the auxiliary focus (71) relative to the substrate (60) comprises means for positioning the auxiliary focus (71) relative to the measuring volume (70).

19. Apparatus according to one of claims 15 or 18, **characterized in that** the device for positioning the auxiliary focus (71) relative to the measuring volume (70) comprises means for adjusting the relative position of the objectives (32,34).

20. Apparatus according to claim 15, 16, 18 or 19, **characterized in that** the device for positioning the auxiliary focus (71) relative to the measuring volume (70) comprises means for variation of the convergence of those ray bundles being focussed by the respective objective (32,34) for generating the auxiliary focus (71) and the measuring volume (70).

21. Use of the apparatus according to one of claims 15 to 20 in the research of active ingredients, the functional analysis of combinatoric-chemical or combinatoric-biological synthesis-products, the functional genom-analyses, the evolutive biotechnology, the diagnostics, the proteom-analyses or in the investigation of material.

## Revendications

1. Procédé de détection optique d'au moins une entité, pour laquelle il s'agit de molécules, de complexes de molécules, de polymères, de particules polymères, de particules constituées par des matériaux minéraux, de structures vésiculaires, de cellules, de bactéries ou de virus, selon lequel:
- la au moins une entité est disposée sur et/ou dans un substrat (60) située de préférence sur un support (61), dont l'indice de réfraction diffère d'au moins une composante d'un composant jouxtant le substrat (60),
- la au moins une entité avec un volume de mesure (70) est balayée moyennant l'utilisation d'au moins un dispositif confocal ou conçu pour la régulation multiphotonique et constitué par une première couche de rayonnement (10) et au moins un premier objectif (32), moyennant l'obtention de valeurs de mesure de paramètres optiques, et les valeurs de mesure sont traitées de manière à caractériser la au moins une entité à l'aide d'un traitement de signaux,
- la au moins une entité conserve pour l'essentiel, pendant la durée de l'enregistrement des mesures, sa position par rapport au substrat (60) et/ou au support (61),
- avant et/ou pendant le processus de balayage un foyer auxiliaire (71) est produit moyennant l'utilisation d'au moins une seconde source de rayonnement (11) et d'un second objectif (34), qui est située au moins en partie sur la surface limite (62) entre le substrat (60) et un composant contigu ou une autre surface limite (62) située dans une relation spatiale définie par rapport à l'entité,
- le rayonnement produit par la première source de rayonnement (10) est collimaté par une première optique (33) et le rayonnement produit par la seconde source de rayonnement (11) est collimaté par une seconde optique (31) différente de la précédente,
- une rétroréflexion provenant du foyer auxiliaire (71) est détectée par un détecteur (21) possédant un diaphragme (51) disposé d'une manière confocale et par plusieurs détecteurs (21, 22) comportant des diaphragmes (51, 52) disposés le long de l'axe optique de l'objectif (34) qui produit le foyer auxiliaire (71) en avant et/ou en arrière du plan image, et est utilisée pour la mesure de la position de la surface limite (62) et par conséquent pour le positionnement indirect du volume de mesure (70), et
- la position du foyer auxiliaire (71) par rapport au volume de mesure (70) est réglée ou de façon définie ou est réglable d'une manière variable.

2. Procédé pour la détection optique d'au moins une entité, pour laquelle il s'agit de molécules, de complexes de molécules, de polymères, de particules polymères, de particules constituées par des matériaux minéraux, de structures vésiculaires, de cellules, de bactéries ou de virus, selon lequel:
- la au moins une entité est disposée sur et/ou dans un substrat (60) située de préférence sur un support (61), dont l'indice de réfraction diffère d'au moins une composante d'un composant jouxtant le substrat (60),
- la au moins une entité avec un volume de mesure (70) est balayée moyennant l'utilisation d'au moins un dispositif confocal ou conçu pour la régulation multiphotonique et constitué par une première couche de rayonnement (10) et au moins un premier objectif (32), moyennant l'obtention de valeurs de mesure de paramètres optiques, et les valeurs de mesure sont traitées de manière à caractériser la au moins une entité à l'aide d'un traitement de signaux,
- la au moins une entité conserve pour l'essentiel, pendant la durée de l'enregistrement des mesures, sa position par rapport au substrat (60) et/ou au support (61),
- avant et/ou pendant le processus de balayage un foyer auxiliaire (71) est produit moyennant l'utilisation d'au moins une seconde source de rayonnement (11) et de l'objectif (32), qui est située au moins en partie sur la surface limite (62) entre le substrat (60) et un composant contigu ou une autre surface limite (62) située dans une relation spatiale définie par rapport à l'entité,
- le rayonnement produit par la première source de rayonnement (10) est collimaté par une première optique (33) et le rayonnement produit par la seconde source de rayonnement (11) est collimaté par une seconde optique (31) différente de la précédente,
- une rétroréflexion provenant du foyer auxiliaire (71) est détectée par un détecteur (21) possédant un diaphragme (51) disposé d'une manière confocale et par plusieurs détecteurs (21, 22) comportant des diaphragmes (51, 52) disposés le long de l'axe optique de l'objectif (34) qui produit le foyer auxiliaire (71) en avant et/ou en arrière du plan image, et est utilisée pour la mesure de la position de la surface limite (62) et par conséquent pour le positionnement indirect du volume de mesure (70), et
- la position du foyer auxiliaire (71) par rapport au volume de mesure (70) est réglée ou de façon définie ou est réglable d'une manière variable.

3. Procédé selon la revendication 1 et/ou 2, **caractérisé en ce que** l'étendue du volume, détectée de façon confocale, du foyer auxiliaire (71) notamment dans la direction de l'axe optique respectif des objectifs (32, 34) est inférieure à l'étendue du volume de mesure (70).

4. Procédé selon la revendication 3, **caractérisé en ce que** pour l'obtention de l'étendue plus faible du volume, détectée de façon confocale, du foyer auxiliaire (71) ce dernier est produit à l'aide d'un second objectif (34) comportant une ouverture numérique, qui est supérieure à l'ouverture numérique du premier objet (32) utilisé pour la production du volume de mesure (70).

5. Procédé selon la revendication 3, **caractérisé en ce que** pour l'obtention de l'étendue plus faible du volume, détecté de façon confocale, du foyer auxiliaire (71) pour la production du volume de mesure (70) on utilise une partie plus faible de l'ouverture numérique d'un objectif commun ou des objectifs respectifs (32, 34) que pour la production du foyer auxiliaire (71).

6. Procédé selon la revendication 3, **caractérisé en ce que** pour la production de l'étendue plus faible du volume, détectée de façon confocale du foyer auxiliaire (71), on utilise un diaphragme (51) disposé de façon confocale, lors de la détection du foyer auxiliaire (71), qui possède une ouverture inférieure à un diaphragme (50) disposé d'une manière confocale et utilisé lors de la détection du volume de mesure (70).

7. Procédé selon l'une des revendications 1 à 6, **caractérisé en ce que** pour le positionnement indirect du volume de mesure (70), la position du foyer auxiliaire (71) par rapport à la surface limite (62) est déplacée de préférence périodiquement essentiellement le long de l'axe optique de l'objectif (34) produisant le foyer auxiliaire (71), l'intensité de la rétroréflexion est enregistrée en fonction du déplacement par le détecteur (21) et la position du foyer auxiliaire (71) est asservie de manière que l'intensité de la rétroréflexion atteigne son maximum.

8. Procédé selon l'une des revendications 1 à 6, **caractérisé en ce que** pour le positionnement indirect du volume de mesure (70), la position du foyer auxiliaire (71) par rapport à la surface limite (62) est déplacée aussi bien latéralement par rapport à l'axe optique que l'objectif (34), qui produit le foyer auxiliaire (71), qu'axialement.

9. Procédé selon la revendication 7 et/ou 8, **caractérisé en ce que** l'amplitude du déplacement de préférence périodique du foyer auxiliaire (71) est inférieure ou égale à l'étendue axiale du volume de mesure (70).

10. Procédé selon l'une des revendications 1 à 6, **caractérisé en ce que** l'intensité de la rétroréflexion est détectée à l'aide d'au moins deux détecteurs (21, 22) et que la position de la surface limite (62) est déterminée à partir de la distribution des intensités détectées par les détecteurs (21, 22).

11. Procédé selon l'une des revendications 1 à 10, **caractérisé en ce qu'**on enregistre comme paramètre optique l'intensité de la lumière diffuse et/ou l'intensité de la lumière diffuse en fonction de la polarisation et/ou l'intensité de fluorescence dans le cas d'au moins une longueur d'onde et/ou l'intensité de fluorescence en fonction de la polarisation et/ou la durée de vie de fluorescence et/ou des luminosités moléculaires et/ou de la dispersion Raman et/ou la luminescence.

12. Procédé selon l'une des revendications 1 à 11, **caractérisé en ce qu'**on utilise des substrats minéraux ou organiques (60), notamment des gels polymères, des particules polymères, des particules constituées de matériaux minéraux, des structures vésiculaires, des cellules, des bactéries et des virus.

13. Procédé selon l'une des revendications 1 à 12, **caractérisé en ce que** des entités et/ou des substrats (60), sélectionnés sur la base des paramètres optiques, sont séparés pendant ou à la suite du processus de balayage par rapport aux autres entités et/ou substrats (60).

14. Utilisation du procédé selon l'une des revendications 1 à 13, pour la recherche de substances actives, l'analyse fonctionnelle de produits de synthèse en pure chimie combinatoire ou de nature biologique combinatoire, l'analyse fonctionnelle du génome, la biotechnologie évolutive, le diagnostic, l'analyse protéomique, ou la recherche de substances.

15. Dispositif pour la mise en oeuvre du procédé selon la revendication 1, pour la détection optique d'au moins une entité, pour laquelle il s'agit de molécules, de complexes de molécules, de polymères, de particules polymères, de particules constituées par des matériaux minéraux, des structures vésiculaires, des cellules, des bactéries ou des virus, comportant
- au moins une première source de rayonnement (10) ainsi qu'au moins un dispositif confocal ou conçu pour l'excitation multiphotonique, et constitué par un premier objectif (32) et au moins un premier détecteur (20) pour enregistrer des valeurs de mesure à partir d'un volume de mesure (70);
- au moins une seconde source de rayonnement (11) ainsi qu'au moins un autre dispositif constitué par un second objectif (34) et au moins un second détecteur (21) prévu pour l'enregistrement d'une rétroréflexion à partir d'un foyer auxiliaire (71) et comportant un diaphragme (51) disposé de façon confocale ou plusieurs seconds détecteurs (21, 22) prévus pour la réception d'une rétroréflexion à partir d'un foyer auxiliaire (71), avec des diaphragmes (51, 52) disposés le long de l'axe optique du second objectif (34), qui produit le foyer auxiliaire (71), en avant et/ou en arrière du plan image,
- au moins un dispositif pour le positionnement de volumes de mesure (70) et du foyer auxiliaire (71) par rapport au substrat (60), le foyer auxiliaire (71) étant situé au moins en partie au niveau d'une surface limite (62) entre le substrat (60) et un composant, qui jouxte ce substrat, et sur une autre surface limite (62) qui est disposée selon une relation spatiale définie par rapport à l'entité, et la position de la surface limite (62) peut être mesurée par la rétroréflexion à partir du foyer auxiliaire (71) et par conséquent le volume de mesure (70) peut être positionné indirectement,
- un dispositif pour le positionnement variable du foyer auxiliaire (71) par rapport au volume de mesure (70),
- une première optique (33) qui collimate le rayonnement produit par la première source de rayonnement (10), et
- une seconde optique (31), qui est différente de la première et qui collimate le rayonnement produit par la seconde source de rayonnement (11).

16. Dispositif pour la mise en oeuvre du procédé selon la revendication 2, pour la détection d'au moins une entité, pour laquelle il s'agit de molécules, de complexes de molécules, de polymères, de particules polymères, de particules constituées par des matériaux minéraux, de structures vésiculaires, de cellules, de bactéries ou de virus, comportant:
- au moins une première source de rayonnement (10) ainsi qu'au moins un dispositif confocal ou conçu pour l'excitation multiphotonique, et constitué par un premier objectif (32) et au moins un premier détecteur (20) pour enregistrer des valeurs de mesure à partir d'un volume de mesure (70);
- au moins une seconde source de rayonnement (11) ainsi qu'au moins un autre dispositif constitué par le même objectif (32) et au moins un second détecteur (21) prévu pour l'enregistrement d'une rétroréflexion à partir d'un foyer auxiliaire (71) et comportant un diaphragme (51) disposé de façon confocale ou plusieurs seconds détecteurs (21, 22) prévus pour la réception d'une rétroréflexion à partir d'un foyer auxiliaire (71), avec des diaphragmes (51, 52) disposés le long de l'axe optique du second objectif (34), qui produit le foyer auxiliaire (71), en avant et/ou en arrière du plan image,
- au moins un dispositif pour le positionnement de volumes de mesure (70) et du foyer auxiliaire (71) par rapport au substrat (60), le foyer auxiliaire (71) étant situé au moins en partie au niveau d'une surface limite (62) entre le substrat (60) et un composant, qui jouxte ce substrat, et sur une autre surface limite (62) qui est disposée selon une relation spatiale définie par rapport à l'entité, et la position de la surface limite (62) peut être mesurée par la rétroréflexion à partir du foyer auxiliaire (71) et par conséquent le volume de mesure (70) peut être positionné indirectement,
- un dispositif pour le positionnement variable du foyer auxiliaire (71) par rapport au volume de mesure (70),
- une première optique (33) qui collimate le rayonnement produit par la première source de rayonnement (10), et
- une seconde optique (31), qui est différente de la première et qui collimate le rayonnement produit par la seconde source de rayonnement (11).

17. Dispositif pour la mise en oeuvre du procédé selon la revendication 1, pour la détection optique d'au moins une entité, pour laquelle il s'agit de molécules, de complexes de molécules, de polymères, de particules polymères, de particules constituées par des matériaux minéraux, de structures vésiculaires, de cellules, de bactéries ou de virus, comportant :
- au moins une première source de rayonnement (10) ainsi qu'au moins un dispositif confocal ou conçu pour l'excitation multiphotonique, et constitué par un premier objectif (32) et au moins un premier détecteur (20) pour enregistrer des valeurs de mesure à partir d'un volume de mesure (70);
- au moins une seconde source de rayonnement (11) ainsi qu'au moins un autre dispositif constitué par un second objectif (34) et un second détecteur (21) prévu pour l'enregistrement d'une rétroréflexion à partir d'un foyer auxiliaire (71) et comportant un diaphragme (51) disposé de façon confocale ou plusieurs seconds détecteurs (21, 22) prévus pour la réception d'une rétroréflexion à partir d'un foyer auxiliaire (71), avec des diaphragmes (51, 52) disposés le long de l'axe optique du second objectif (34), qui produit le foyer auxiliaire (71), en avant et/ou en arrière du plan image,
- au moins un dispositif pour le positionnement du volume de mesure (70) et du foyer auxiliaire (71) par rapport au substrat (60), le foyer auxiliaire (71) étant situé au moins en partie au niveau d'une surface limite (62) entre le substrat (60) et un composant, qui jouxte ce substrat, ou sur une autre surface limite (62) qui est disposée selon une relation spatiale définie par rapport à l'entité, et la position de la surface limite (62) peut être mesurée par la rétroréflexion à partir du foyer auxiliaire (71) et par conséquent le volume de mesure (70) peut être positionné indirectement,
- le foyer auxiliaire (71) étant réglé de façon définie par rapport au volume de mesure (70),
- une première optique (33) qui collimate le rayonnement produit par la première source de rayonnement (10), et
- une seconde optique (34), qui est différente de la première et collimate le rayonnement produit par la seconde source de rayonnement (11).

18. Dispositif selon les revendications 15 et/ou 16, **caractérisé en ce que** le dispositif pour le positionnement du volume de mesure (70) et du foyer auxiliaire (71) par rapport à un substrat (60) comprend des moyens pour positionner le foyer auxiliaire (71) par rapport au volume de mesure (70).

19. Dispositif selon l'une des revendications 15 ou 18, **caractérisé en ce que** le dispositif pour le positionnement du foyer auxiliaire (71) par rapport au volume de mesure (70) comprend des moyens pour régler la position relative des objectifs (32, 34).

20. Dispositif selon l'une des revendications 15, 16, 18 ou 20, **caractérisé en ce que** le dispositif pour positionner le foyer auxiliaire (71) par rapport au volume de mesure (70) comprend des moyens pour modifier la convergence des faisceaux de rayonnement, qui sont focalisés pour la production du foyer auxiliaire (71) et du volume de mesure (70), par l'objectif respectif (32, 34).

21. Utilisation du dispositif selon les revendications 15 à 20 dans la recherche de substances actives, l'analyse fonctionnelle de produits de synthèse de nature chimique combinatoire ou de nature biologique combinatoire, l'analyse fonctionnelle du génome, la biotechnologie évolutive, le diagnostic, l'analyse protéomique, ou la recherche de substances.
